# EUROPEAN PATENT APPLICATION

(11) **EP 4 564 729 A1**
(43) Date of publication of application: **04.06.2025**
(21) Application number: 24215981.2
(22) Date of filing: 28.11.2024
(51) Int. Cl.: H04L 5/00, H04L 5/14

(54) **TIME DIVISION DUPLEX AND SUB-BAND FULL DUPLEX SYMBOL TRANSITION CONFIGURATION**

(30) Priority: 01.12.2023 US 202363605151 P; 31.10.2024 US 202418933889
(71) Applicant: Apple Inc., Cupertino, CA 95014 (US)
(72) Inventor: FAKOORIAN, Seyed Ali Akbar, Cupertino, CA, 95014 (US); BHAMRI, Ankit, 80335 München (DE); YE, Chunxuan, Cupertino, CA, 95014 (US); ZHANG, Dawei, Cupertino, CA, 95014 (US); HE, Hong, Cupertino, CA, 95014 (US); YE, Sigen, Cupertino, CA, 95014 (US); ZENG, Wei, Cupertino, CA, 95014 (US)
(74) Representative: Lang, Johannes

(57) **Abstract**

The present application relates to devices and components including apparatus, systems, and methods to configure sub-band full duplex (SBFD) and non-SBFD transition operations in wireless communication systems.

## Description

### CROSS-REFERENCE TO RELATED APPLICATION

This application claims priority to U.S. Provisional Patent Application No. 63/605,151, entitled "Time Division Duplex and Sub-band Full Duplex Symbol Transition Configuration," filed on December 1, 2023, and U.S. Nonprovisional Patent Application No. 18/933,889, entitled "Time Division Duplex and Sub-band Full Duplex Symbol Transition Configuration," filed on October 31, 2024, the disclosures of which are incorporated by reference herein in their entireties for all purposes.

### TECHNICAL FIELD

The present application relates to the field of wireless technologies and, in particular, to operations for transitions between time division duplex (TDD) symbols and sub-band full duplex (SBFD) symbols.

### BACKGROUND

Third Generation Partnership Project (3GPP) networks provide for different duplexing configurations for slots to be utilized for transmissions. The duplexing configurations define which times and/or frequencies can be utilized for transmissions of different signals. Base stations and user equipments (UEs) can exchange transmissions for configuring the duplexing configurations for the slots.

### BRIEF DESCRIPTION OF THE DRAWINGS

FIG. 1 illustrates example slot arrangements in accordance with some embodiments.
FIG. 2 illustrates example information elements that provides an indication of guard symbols in accordance with some embodiments.
FIG. 3 illustrates an example of symbol arrangement in accordance with some embodiments.
FIG. 4 illustrates an example of symbol arrangement in accordance with some embodiments.
FIG. 5 illustrates example information elements for approach 1-4 in accordance with some embodiments.
FIG. 6 illustrates an example transmission arrangement for a user equipment (UE) in accordance with some embodiments.
FIG. 7 illustrates an example signaling chart in accordance with some embodiments.
FIG. 8 illustrates example slot arrangements in accordance with some embodiments.
FIG. 9 illustrates an example slot representation in accordance with some embodiments.
FIG. 10 illustrates an example slot representation in accordance with some embodiments.
FIG. 11 illustrates an example slot representation in accordance with some embodiments.
FIG. 12 illustrates an example procedure for configuring one or more transitions between sub-band full duplex (SBFD) symbols and non-SBFD symbols in accordance with some embodiments.
FIG. 13 illustrates an example procedure for configuring one or more transitions between SBFD symbols and non-SBFD symbols in accordance with some embodiments.
FIG. 14 illustrates an example procedure for scheduling a transmission that extends into both SBFD symbols and non-SBFD symbols in accordance with some embodiments.
FIG. 15 illustrates an example UE in accordance with some embodiments.
FIG. 16 illustrates an example next base station (gNB) in accordance with some embodiments.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrase "A or B" means (A), (B), or (A and B); and the phrase "based on A" means "based at least in part on A," for example, it could be "based solely on A" or it could be "based in part on A."

The following is a glossary of terms that may be used in this disclosure.

The term "circuitry" as used herein refers to, is part of, or includes hardware components such as an electronic circuit, a logic circuit, a processor (shared, dedicated, or group) or memory (shared, dedicated, or group), an application specific integrated circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable system-on-a-chip (SoC)), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, or transferring digital data. The term "processor circuitry" may refer an application processor, baseband processor, a central processing unit (CPU), a graphics processing unit, a single-core processor, a dual-core processor, a triple-core processor, a quad-core processor, or any other device capable of executing or otherwise operating computer-executable instructions, such as program code, software modules, or functional processes.

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, or the like.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "computer system" as used herein refers to any type interconnected electronic devices, computer devices, or components thereof. Additionally, the term "computer system" or "system" may refer to various components of a computer that are communicatively coupled with one another. Furthermore, the term "computer system" or "system" may refer to multiple computer devices or multiple computing systems that are communicatively coupled with one another and configured to share computing or networking resources.

The term "resource" as used herein refers to a physical or virtual device, a physical or virtual component within a computing environment, or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, or the like. A "hardware resource" may refer to compute, storage, or network resources provided by physical hardware element(s). A "virtualized resource" may refer to compute, storage, or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with or equivalent to "communications channel," "data communications channel," "transmission channel," "data transmission channel," "access channel," "data access channel," "link," "data link," "carrier," "radio-frequency carrier," or any other like term denoting a pathway or medium through which data is communicated. Additionally, the term "link" as used herein refers to a connection between two devices for the purpose of transmitting and receiving information.

The terms "instantiate," "instantiation," and the like as used herein refers to the creation of an instance. An "instance" also refers to a concrete occurrence of an object, which may occur, for example, during execution of program code.

The term "connected" may mean that two or more elements, at a common communication protocol layer, have an established signaling relationship with one another over a communication channel, link, interface, or reference point.

The term "network element" as used herein refers to physical or virtualized equipment or infrastructure used to provide wired or wireless communication network services. The term "network element" may be considered synonymous to or referred to as a networked computer, networking hardware, network equipment, network node, virtualized network function, or the like.

The term "information element" refers to a structural element containing one or more fields. The term "field" refers to individual contents of an information element, or a data element that contains content. An information element may include one or more additional information elements.

The term "based at least in part on" as used herein may indicate that an item is based solely on another item and/or an item is based on another item and one or more additional items. For example, item 1 being determined based at least in part on item 2 may indicate that item 1 is determined based solely on item 2 and/or is determined based on item 2 and one or more other items in embodiments.

The term "base station" as used herein may refer to a NodeB, an evolved NodeB (eNB), a next generation NodeB (gNB), and/or a radio access network node. Further, the term "gNB" as used herein may be interpreted as a base station, such that the term gNB may refer to a base station, an eNB, a gNB, and/or a radio access network node.

The term "symbol" or "symbols" as used herein may be proceeded by a prefix, such as SBFD symbols. The prefix may indicate a use for which the symbol or symbols are configured. For example, SBFD symbols may refer to symbols that are configured for SBFD operation. Non-SBFD symbols may refer to symbols that are configured for non-SBFD operation.

With advances in network technology, different approaches for configuring slots could be beneficial for network operation. Approaches are described herein for configuring transitions between time division duplex (TDD) symbols and sub-band full duplex (SBFD) symbols for slots.

### SBFD & Dynamic TDD

Full-duplex (FD) operation within a TDD band is being discussed as part of release 18 (Rel-18) (and sixth generation (6G)) enhancements. FD described herein mainly refers to the case that (at least) a next generation base station (gNB) is operating in full-duplex, i.e. simultaneously transmitting and receiving. In Rel-18, dynamic TDD and also full-duplex operation at gNB is to be studied under the assumption of half-duplex UE.

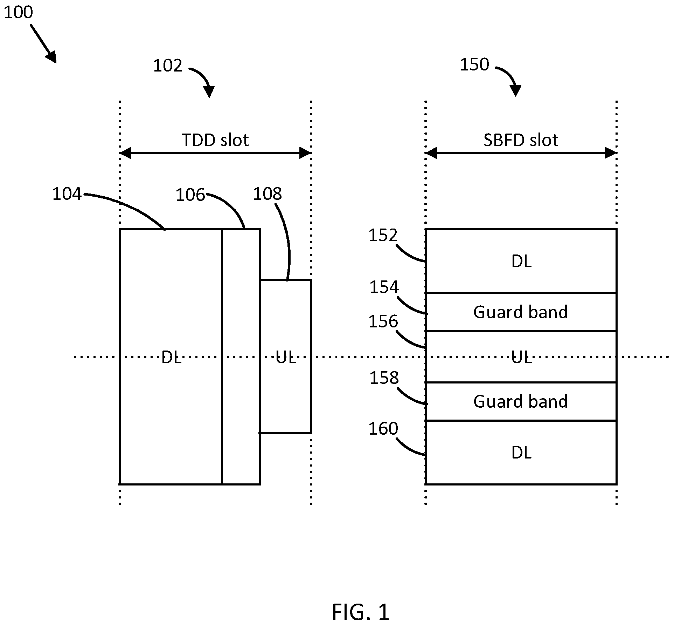

Example for full-duplex operation is shown in FIG. 1. In particular, FIG. 1 illustrates example slot arrangements 100 in accordance with some embodiments. The slot arrangements 100 illustrate an example of resource assignments in different slots. The x-axis of the slot arrangements 100 corresponds to time and the y-axis of the slot arrangements 100 corresponds to frequency.

The slot arrangements 100 include an example TDD slot arrangement 102. The TDD slot arrangement 102 illustrates an example of resource assignments for a slot configured with TDD and FD operation. The TDD slot may have resource assignments for an entire duration of the TDD slot.

In the illustrated embodiment, the TDD slot arrangement 102 includes a downlink (DL) assignment portion 104, where the resources within the DL assignment portion 104 are to be utilized for DL transmissions. Further, the illustrated TDD slot arrangement 102 includes a guard band 106, where the resources within the guard band 106 may not be utilized for transmissions. The illustrated TDD slot arrangement 102 further includes an uplink (UL) assignment portion 108, where the resources within the UL assignment portion 108 are to be utilized for UL transmissions.

The guard band 106 may separate the DL assignment portion 104 and the UL assignment portion 108 to provide for transition between the assignment portions. While the TDD slot arrangement 102 illustrates an example resource assignment arrangement, it should be that TDD slots in FD operation may have other assignment arrangements that include DL assignment portions, UL assignment portions, and/or guard bands in other embodiments.

The slot arrangements 100 include an example SBFD slot arrangement 150. The SBFD slot arrangement 150 illustrates an example of resource assignments for a slot configured with SBFD and FD operation. The SBFD slot may have resource assignments for an entire sub-band of the SBFD slot.

In the illustrated embodiment, the SBFD slot arrangement 150 includes a first DL assignment portion 152 and a second DL assignment portion 160, where the resources within the first DL assignment portion 152 and the second DL assignment portion 160 are to be utilized for DL transmissions. Further, the illustrated SBFD slot arrangement 150 includes a first guard band 154 and a second guard band 158, where resources within the first guard band 154 and the second guard band 158 may not be utilized for transmissions. The illustrated SBFD slot arrangement 150 further includes a UL assignment portion 156, where resources within the UL assignment portion 156 are to be utilized for UL transmissions.

The first guard band 154 may separate the first DL assignment portion 152 and the UL assignment portion 156 to avoid interference between signals transmitted via the resources in the first DL assignment portion 152 and signals transmitted via the resources in the UL assignment portion 156. The second guard band 158 may separate the second DL assignment portion 160 and the UL assignment portion 156 to avoid interference between signals transmitted via the resources in the second DL assignment portion 160 and signals transmitted via the resources in the UL assignment portion 156. While the SBFD slot arrangement 150 illustrates an example resource assignment arrangement, it should be that SBFD slots in FD operation may have other assignment arrangements that include DL assignment portions, UL assignment portions, and/or guard bands in other embodiments.

### Issue Statement

Radio access network work group 1 (RAN1) has studied feasibility and possible enhancements required for SBFD operation at the next generation NodeB (gNB). The conclusion has been made that a maximum of two transition points, including one transition point from non-SBFD symbols to SBFD symbols and one transition point from SBFD symbols to non-SBFD symbols, within a TDD UL/DL pattern period can be considered as a starting point where the transition point can be aligned with slot boundary or within a slot.

This disclosure describes the open aspects of indication/configuration of transition points, and whether/how a user equipment (UE) can be scheduled across different sub-bands in SBFD symbols/slots. For the indication/configuration of transition points, the aspects described herein include the required guard symbols for transition to/from SBFD symbols, and/or cell-specific vs UE specific components & indications. For whether/how a UE can be scheduled across different sub-bands in SBFD symbols/slots, the aspects described herein include requirements and procedure to scheduling a UE in UL sub-band in time T₀ and in DL sub-band in T₁ within the indicated SBFD symbols/slots, and requirements and procedure to scheduling a UE in upper DL sub-band in time T₀ and lower DL sub-band in T₁ within the indicated SBFD symbols/slots.

### Indication of Guard Symbols for Transition

For an approach 1-1, indication of required guard symbols for transition between legacy TDD and SBFD symbols may be as part of an SBFD configuration indication, within a TDD-UL-DL-Pattern. For example, a base station may generate and/or transmit a message that includes an indication of required guard symbols for transmission between TDD symbols and SBFD symbols. The indication may be included as part of an SBFD configuration indication within a TDD-UL-DL-Pattern provided within the message. The base station may transmit the message to a UE that is to implement the required guard symbols.

For each UL-DL TDD pattern, a UE may be configured with TDD parameters, including a reference subcarrier spacing parameter (referenceSubcarrierSpacing), a transmission periodicity parameter (dl-UL-TransmissionPeriodicity), a number of DL slots parameter (nrofDownlinkSlots), a number of DL symbols parameter (nrofDownlinkSymbols), a number of UL slots parameter (nrofUplinkSlots), and/or a number of UL symbols parameter (nrofUplinkSymbols). These parameters may define a TDD pattern with periodicity P, starting with nrofDownlinkSlots, and ending with nrofUplinkSlots, and in between there are nrofDownlinkSymbols, flexible symbols, and nrofUplinkSymbols, all with the reference subcarrier spacing (SCS) given by referenceSubcarrierSpacing.

New signaling may include a first transition offset parameter (Offset_transition1_1) and/ a second transition offset parameter (Offset_transition1_2). Offset_transition1_1 may indicate (as an offset from the start of each periodicity P) the first time that gNB transitions from non-SBFD to SBFD. This offset may be defined by a first slot offset parameter (Offset slot), and/or a first symbol offset parameter (Offset_symbl). Offset_transition1_2 may indicate (as an offset from the start of each periodicity P) the first time that gNB transits from SBFD to non-SBFD. This offset may be defined by a second slot offset parameter (Offset_slot), and/or a second symbol offset parameter (Offset symbl). A first guard time parameter (TDD2SBFD_Guard) and a second guard time parameter (SBFD2TDD_Guard), respectively, may represent the guard time (in milliseconds (ms)) required for operation mode switch at gNB.

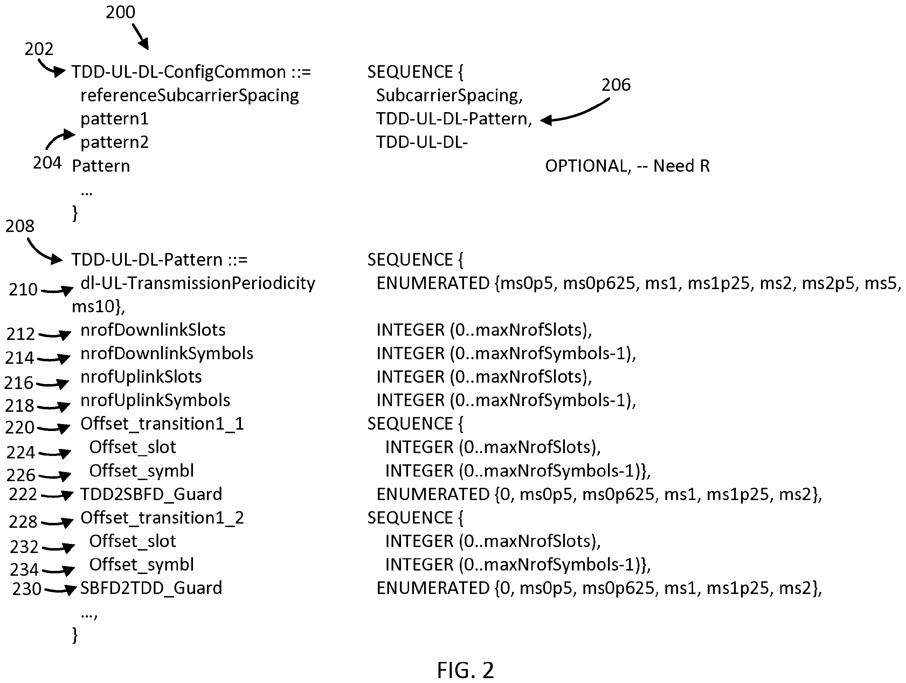

FIG. 2 illustrates example information elements 200 that provides an indication of guard symbols in accordance with some embodiments. For example, the information elements 200 may provide information for configuring a UE for an operation mode switch. The information elements 200 may be transmitted in a message that includes configuration information from a base station to the UE.

The information elements 200 include a common configuration information element 202 (TDD-UL-DL-ConfigCommon) for configuring a UE. The common configuration information element 202 may include one or more pattern fields 204. In the illustrated embodiment, a pattern field value 206 for one of the pattern fields 204 have a value of TDD-UL-DL-Pattern.

The information elements 200 include a pattern information element 208 (TDD-UL-DL-Pattern). The pattern field value 206 having a value of TDD-UL-DL-Pattern may indicate that the pattern information element 208 is to be utilized for configuring the UE receiving the common configuration information element 202. For example, a UE may identify the common configuration information element 202 within a message received from a base station, and determine that the pattern information element 208 is to be utilized for configuring the UE based on the pattern field value 206 being TDD-UL-DL-Pattern. The pattern information element 208 may provide configuration information for transitioning between TDD symbols and SBFD symbols.

The pattern information element 208 may include a transmission periodicity parameter 210 (dl-UL-TransmissionPeriodicity), a number of DL slots parameter 212 (nrofDownlinkSlots), a number of DL symbols parameter 214 (nrofDownlinkSymbols), a number of UL slots parameter 216 (nrofUplinkSlots), and/or a number of UL symbols parameter 218 (nrofUplinkSymbols). These parameters may define UL assignments and/or DL assignments within corresponding one or more slots for a UE receiving the common configuration information element 202.

The pattern information element 208 may further include information for one or more guard symbols to be utilized when transitioning between non-SBFD symbols and SBFD symbols. In the illustrated embodiment, the information for the guard symbols may apply to transitions between TDD symbols and SBFD symbols. The information for the one or more guard symbols may indicate times when the UE is not to transmit signals to the base station and/or is not expected to receive signals from the base station.

The illustrated pattern information element 208 includes first guard symbol parameters 220. The first guard symbol parameters 220 may provide information for guard symbols related to a transition. In the illustrated embodiment, the first guard symbol parameters 220 provide information for guard symbols for transitions from TDD symbols to SBFD symbols, as indicated by TDD2SBFD_Guard parameter 222 within the first guard symbol parameters 220. The TDD2SBFD_Guard parameter 222 may have a value that indicate a duration for guard symbols when the transition from the TDD symbols to SBFD symbols is implemented.

The first guard symbol parameters 220 may further indicate an offset at which the guard symbols are to begin. For example, the first guard symbol parameters 220 may include a slot offset parameter 224 (Offset slot) and/or a symbol offset parameter 226 (Offset_symbl). The slot offset parameter 224 and the symbol offset parameter 226 may indicate a number of slots and a number of symbols at which a start of the guard symbols is to be offset from a start of each periodicity. For example, the start of the guard symbols is to be offset by a number of slots indicated by a value of the slot offset parameter 224 plus a number of symbols indicated by a value of the symbol offset parameter 226. A UE that receives the common configuration information element 202 may determine that guard symbols for a TDD symbol to SBFD symbol transition are to start at the offset indicated by the slot offset parameter 224 and the symbol offset parameter 226, and that the guard symbols are to extend for the duration indicated by a value of the TDD2SBFD_Guard parameter 222.

The illustrated pattern information element 208 includes second guard symbol parameters 228. The second guard symbol parameters 228 may provide information for guard symbols related to a transition. In the illustrated embodiment, the second guard symbol parameters 228 provide information for guard symbols for transitions from SBFD symbols to TDD symbols, as indicated by SBFD2TDD_Guard parameter 230 within the second guard symbol parameters 228. The SBFD2TDD_Guard parameter 230 may have a value that indicates a duration for guard symbols when the transition from the SBFD symbols to TDD symbols is implemented.

The second guard symbol parameters 228 may further indicate an offset at which the guard symbols are to begin. For example, the second guard symbol parameters 228 may include a slot offset parameter 232 (Offset slot) and/or a symbol offset parameter 234 (Offset_symbl). The slot offset parameter 232 and the symbol offset parameter 234 may indicate a number of slots and a number of symbols at which a start of the guard symbols is to be offset from a start of each periodicity. For example, the start of the guard symbols is to be offset by a number of slots indicated by a value of the slot offset parameter 232 plus a number of symbols indicated by a value of the symbol offset parameter 234. A UE that receives the common configuration information element 202 may determine that guard symbols for a SBFD symbol to TDD symbol transition are to start at the offset indicated by the slot offset parameter 232 and the symbol offset parameter 234, and that the guard symbols are to extend for the duration indicated by a value of the TDD2SBFD_Guard parameter 230.

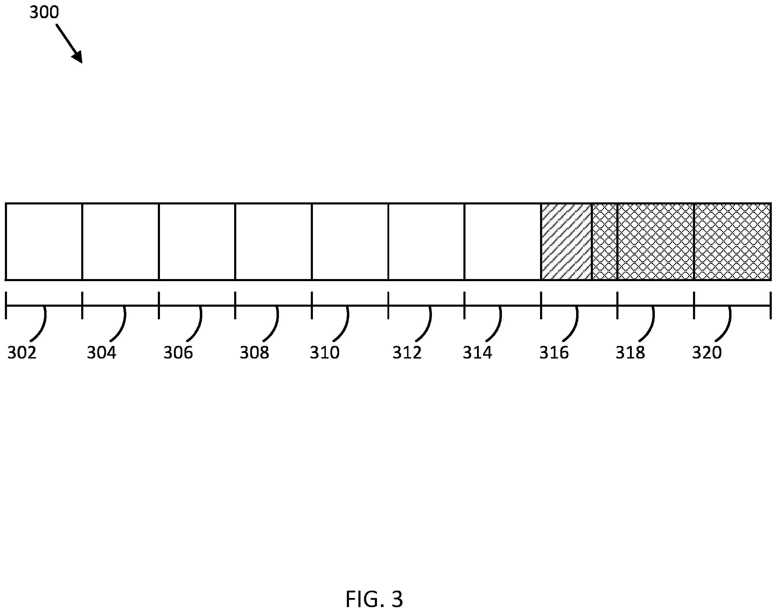

FIG. 3 illustrates an example of symbol arrangement 300 in accordance with some embodiments. The symbol arrangement 300 illustrates a transition from DL symbols to UL symbols in accordance with some embodiments.

The symbol arrangement 300 may be defined by a TDD-UL-DL-ConfigCommon information element, such as the common configuration information element 202 (FIG. 2). In the illustrated embodiment, the symbol arrangement 300 may be defined with an SCS (referenceSubcarrierSpacing) of 30 kilohertz (kHz), a periodicity (dl-UL-TransmissionPeriodicity) of 5 ms, a number of DL slots (nrofDownlinkSlots) of 7, a number of DL symbols (nrofDownlinkSymbols) of 0, a number of UL slots (nrofUplinkSlots) of 2, and a number of UL symbols (nrofUplinkSymbols) of 2.

The symbol arrangement 300 may include one or more slots. In the illustrated embodiment, the symbol arrangement 300 includes a first slot 302, as second slot 304, a third slot 306, a fourth slot 308, a fifth slot 310, a sixth slot 312, a seventh slot 314, an eighth slot 316, a ninth slot 318, and a tenth slot 320. In accordance with the information provided by the parameters within the TDD-UL-DL-ConfigCommon information element, the symbol arrangement 300 may include 7 slots configured for DL transmissions, as indicated by the representations of the first slot 302 through the seventh slot 314 being represented with no fill. Further, the symbol arrangement may include 2 slots and 2 symbols configured for UL transmissions, as indicated by the representations of the ninth slot 318, the tenth slot 320, and a portion of the eighth slot 316 being represented with diagonal cross-hatch fill. The slots and symbols between the DL configured slots and symbols and the UL configured slots and symbols may be configured for flex, as indicated by a portion of eighth slot 316 being represented with diagonal line fill. The flex configured slots and symbols may be used for either UL transmissions and/or DL transmissions.

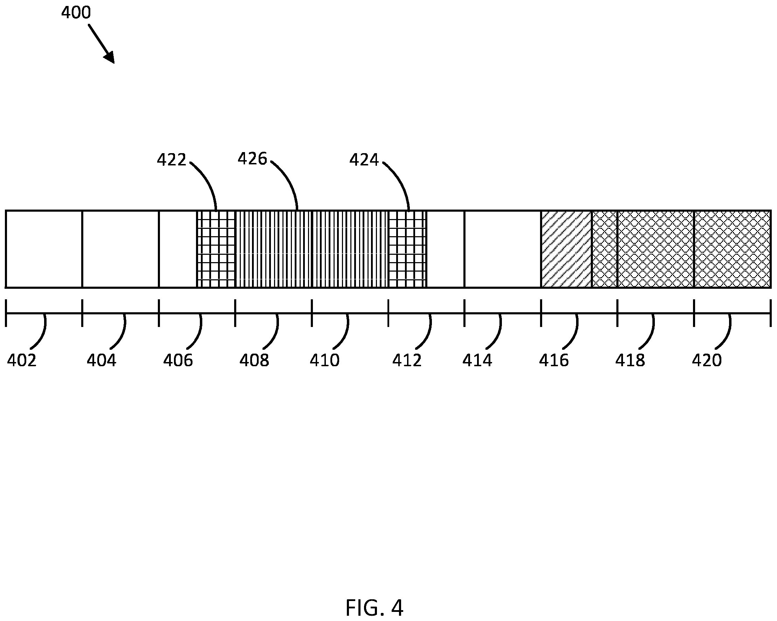

FIG. 4 illustrates an example of symbol arrangement 400 in accordance with some embodiments. The symbol arrangement 400 illustrates a transition from DL symbols to UL symbols in accordance with some embodiments. Further, the symbol arrangement 400 illustrates transitions between TDD symbols and SBFD symbols. The symbol arrangement 400 illustrates guard symbols for transitions, as defined in accordance with the approaches described herein.

The symbol arrangement 400 may be defined by a TDD-UL-DL-ConfigCommon information element, such as the common configuration information element 202 (FIG. 2). In the illustrated embodiment, the symbol arrangement 300 may be defined with an SCS (referenceSubcarrierSpacing) of 30 kHz, a periodicity (dl-UL-TransmissionPeriodicity) of 5 ms, a number of DL slots (nrofDownlinkSlots) of 7, a number of DL symbols (nrofDownlinkSymbols) of 0, a number of UL slots (nrofUplinkSlots) of 2, and a number of UL symbols (nrofUplinkSymbols) of 2. Further, the symbol arrangement 400 is defined to have guard symbols for the transitions between TDD symbols and SBFD symbols. For example, the symbol arrangement 400 in the illustrated embodiment is defined with guard symbols for transitions from TDD symbols to SBFD symbols with an offset (Offset_transition1_1) of 2 slots and 7 symbols ({Offset_slot=2, Offset_symbl = 7} and a duration (TDD2SBFD_Guard) of 0.25 ms. Further, the symbol arrangement 400 in the illustrated embodiment is defined with guard symbols for transitions from SBFD symbols to TDD symbols with an offset (Offset_transition1_2) of 5 slots and 0 symbols ({Offset_slot=5, Offset_symbl = 0}) and a duration (SBFD2TDD_Guard) of 0.25 ms.

The symbol arrangement 400 may include one or more slots. In the illustrated embodiment, the symbol arrangement 400 includes a first slot 402, as second slot 404, a third slot 406, a fourth slot 408, a fifth slot 410, a sixth slot 412, a seventh slot 414, an eighth slot 416, a nineth slot 418, and a tenth slot 420. The symbol arrangement 400 may have a same UL symbol and DL symbol arrangement as the symbol arrangement 300 (FIG. 3). However, the symbol arrangement 400 further includes a transition from TDD symbols to SBFD symbols and a transition back from SBFD symbols to TDD symbols.

The symbol arrangement 400 may include first guard symbols 422, as indicated by the vertical/horizontal crosshatch fill. The first guard symbols 422 may correspond to a transition from TDD symbols to SBFD symbols. The first guard symbols 422 may be defined by the Offset_transition1_1. For example, the first guard symbols 422 may be offset from the start of the periodicity (which occurs at the start of the first slot 402) by 2 slots and 7 symbols, as defined by the Offset_transition1_1. Accordingly, the first guard symbols 422 are located within the third slot 406 at a position that is 2 slots and 7 symbols from the start of the periodicity. A duration of the first guard symbols 422 may be 0.25 ms, as defined by Offset_transition1_1.

The symbol arrangement 400 may include second guard symbols 424, as indicated by the vertical/horizontal crosshatch fill. The second guard symbols 424 may correspond to a transition from SBFD symbols to TDD symbols. The second guard symbols 424 may be defined by the Offset_transition1_2. For example, the second guard symbols 424 may be offset from the start of the periodicity (which occurs at the start of the first slot 402) by 5 slots and 0 symbols, as defined by the Offset_transition1_2. Accordingly, the second guard symbols 424 are located within the sixth slot 412 at a position that is 5 slots and 0 symbols from the start of the periodicity. A duration of the second guard symbols 424 may be 0.25 ms, as defined by Offset_transition1_2.

The symbols prior to the first guard symbols 422 may be TDD symbols. A first transition may occur during the first guard symbols 422, such that the symbols after the first guard symbols 422 are SBFD symbols. The symbols prior to the second guard symbols 424 may be SBFD symbols. A second transition may occur during the second guard symbols 424, such that the symbols after the second guard symbols 424 are TDD symbols. Accordingly, SBFD symbols 426 may be located between the first guard symbols 422 and the second guard symbols 424, as indicated by the vertical line fill. In the illustrated embodiment, the SBFD symbols 426 are located within the fourth slot 408 and the fifth slot 410.

For an approach 1-2, a UE can be indicated with more than one transition non-SBFD-SBFD-non-SBFD, where pair of Offset_transitionj_1 and Offset_transitionj_2 correspond to jth non-SBFD-SBFD-non-SBFD. For example, there may be more than one transition set from non-SBFD symbols to SBFD symbols and back to non-SBFD symbols during a period. Each pair of Offset_transitionj_1 and Offset_transitionj_2 may define guard symbols for a transition from non-SBFD symbols to SBFD symbols and a transition from SBFD symbols to non-SBFD symbols for a corresponding transition set. As an example, the symbol arrangement 400 illustrates one transition set from non-SBFD symbols to SBFD symbols and back to non-SBFD symbols, whereas approach 1-2 may have one or more transition sets.

For an approach 1-3, the configuration of transitions may remain within DL or X (flexible) symbols within TDD-UL-DL-ConfigCommon. That is for any j, UE may not expect Offset_transitionj_1 or Offset_transitionj_2 to overlap with UL symbols in TDD-UL-DL-ConfigCommon. For example, any guard symbols (such as the first guard symbols 422 and the second guard symbols 424) may be defined within DL or flexible symbols within a period. The TDD-UL-DL-ConfigCommon may not be allowed to define guard symbols overlapping with UL symbols.

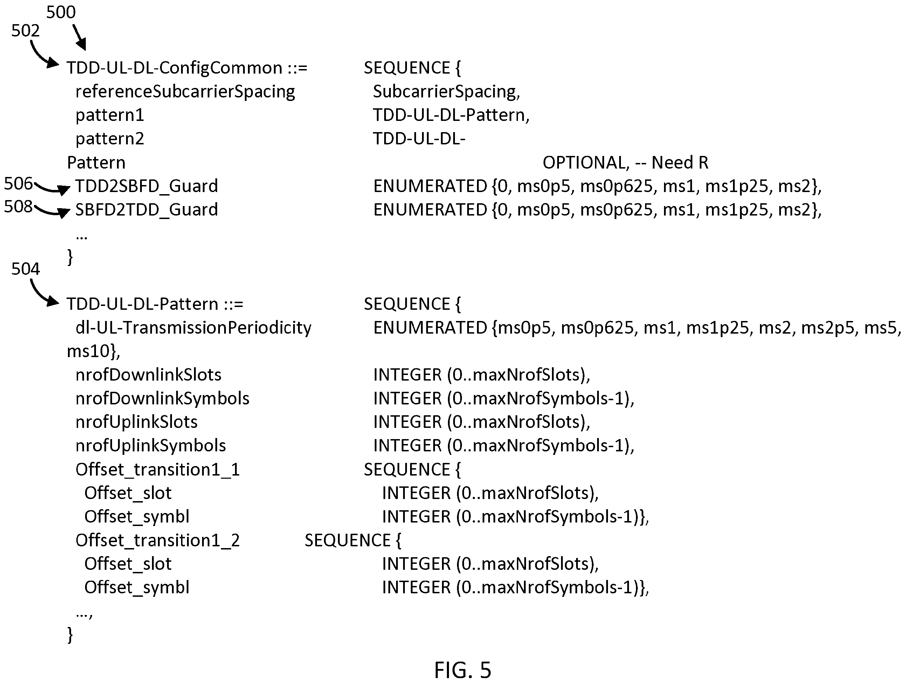

For an approach 1-4, an indication of required guard symbols for transition between legacy TDD and SBFD symbols may be separate of SBFD configuration indication, within TDD-UL-DL-ConfigCommon. FIG. 5 illustrates example information elements 500 for approach 1-4 in accordance with some embodiments. The information elements 500 may provide information for configuring a UE for an operation mode switch. The information elements 500 may be transmitted in a message that includes configuration information from a base station to the UE.

The information elements 500 include a common configuration information element 502 (TDD-UL-DL-ConfigCommon) and a pattern information element 504 (TDD-UL-DL-Pattern). The common configuration information element 502 may include one or more of the features of the common configuration information element 202 (FIG. 2). The pattern information element 504 may include one or more of the features of the pattern information element 208 (FIG. 2).

The common configuration information element 502 may include indications of guard symbols for transition between non-SBFD symbols and SBFD symbols. For example, the common configuration information element 502 includes a first guard indication 506 (TDD2SBFD_Guard) for first guard symbols and a second guard indication 508 (SBFD2TDD_Guard) for second guard symbols. The first guard indication 506 may indicate that first guard symbols for a transition from TDD symbols to SBFD symbols are to be included in the slots. The second guard indication 508 may indicate that second guard symbols for a transition from SBFD symbols to TDD symbols are to be included in the slots. The first guard indication 506 may indicate a duration for the first guard symbols and the second guard indication 508 may indicate a duration for the second guard symbols.

For an approach 1-5, the indication of the approach 1-1 or the indication of approach 1-4 may be cell-specific and it can be through broadcast signaling (ServingCellConfigCommonSIB in system information block 1 (SIB1)) or UE dedicated signaling (ServingCellConfigCommon).

For an approach 2-1, if a UE needs more time to switch from non-SBFD to SBFD (and/or from SBFD to non-SBFD), it can be indicated to the network (NW) as part of UE capability signaling. For example, a UE may generate UE capability signaling that indicates an amount of additional time and/or symbols needed by the UE to switch from non-SBFD symbols to SBFD symbols and/or an amount of additional time and/or symbols needed by the UE to switch from SBFD symbols to non-SBFD symbols. TDD2SBFD_Guard (such as the TDD2SBFD_Guard parameter 222 (FIG. 2) and/or the first guard indication 506 (FIG. 5)) and SBFD2TDD_Guard (such as SBFD2TDD_Guard parameter 230 (FIG. 2) and/or the second guard indication 508 (FIG. 5)) may be cell-specific. The network may update the value of the TDD2SBFD_Guard and/or the SBFD2TDD_Guard based on the indication from the UE for additional time and/or symbols.

For an approach 2-2, for a given UE which needs Y more symbols for transition from nonSBFD to SBFD symbols, i.e. Y+ TDD2SBFD_Guard, the additional required symbols can be extended. For example, the additional time and/or symbols indicated in approach 2-1 may result in the guard symbols being extended in accordance with any of the options described below.

In option 1, the guard symbols may be extended toward SBFD symbols. That is the first Y SBFD symbols may not be usable by the UE, and the UE may not be expected to receive or transmit within the first Y SBFD symbols.

In option 2, the guard symbols may be extended backward from non-SBFD symbols. That is the last Y legacy TDD symbols may not be usable by the UE, and the UE may not be expected to receive within the last Y SBFD symbols

Option 3 may be a combination of Option 1 & 2. For example, the guard symbols may be extended by floor(Y/2) towards the non-SBFD symbols and may be extended by ceil(Y/2) towards the SBFD symbols.

Approach 2-3 may be a similar approach to approach 2-2 and may apply to a given UE which needs Z more symbols for transition from SBFD to non-SBFD symbols, i.e. Z+ SBFD2TDD_Guard. For example, the Z more symbols indicated as needed for switch from SBFD to non-SBFD may be extended in accordance with any of options 1, 2, or 3 from approach 2-2.

For approach 2-4, the UE-specific value Y>=0 (and/or Z>=0), can be different for different switching states. For example, the additional times and/or symbols for switching between SBFD symbols and non-SBFD symbols may differ for changing among UL symbols, DL symbols, and/or X symbols. The UE may indicate these different additional times and/or symbols. Instead of Y, UE can indicate Y₁ and Y₂ for respectively switching from non-SBFD (downlink (D) or X) to SBFD DL sub-band and SBFD UL sub-band. For example, Y₁ can be larger than Y₂ if switching from non-SBFD DL BWP to SBFD DL sub-band requires UE to perform DL BWP switching. In this case, UE may not be scheduled in both DL sub-bands (UE can be scheduled in only one or more of the DL sub-bands).

Instead of Z, UE can indicate some or all of the following. For example, the UE may indicate Z₁ symbols for switching from SBFD UL sub-band to non-SBFD D (or X) symbols. The UE may indicate Z₂ symbols for switching from SBFD UL sub-band to non-SBFD uplink (U) symbols. The UE may indicate Z₃ symbols for switching from SBFD DL sub-band to nonSBFD D (or X) symbols. The UE may indicate Z₄ symbols for switching from SBFD DL sub-band to nonSBFD U symbols. Note that Z₃ (and Z₄) can be larger than Z₁ (and Z₂) if UE had to perform DL BWP switching from/to SBFD sub-bands.

### Hopping Across Sub-bands within SBFD

For approach 3-1, within an indicated set of SBFD symbols/slots, UE can be scheduled on different sub-bands at different times, if required timeline to switch sub-bands is met by the scheduler. Such timeline requirements can be specified as different UE capabilities. More precisely, the following capabilities can be defined. Nₓ symbols for switching from UL sub-band to one of DL sub-bands (or vise versa). N_{y} symbols for switching from upper DL sub-band to lower DL sub-band (or vise versa).

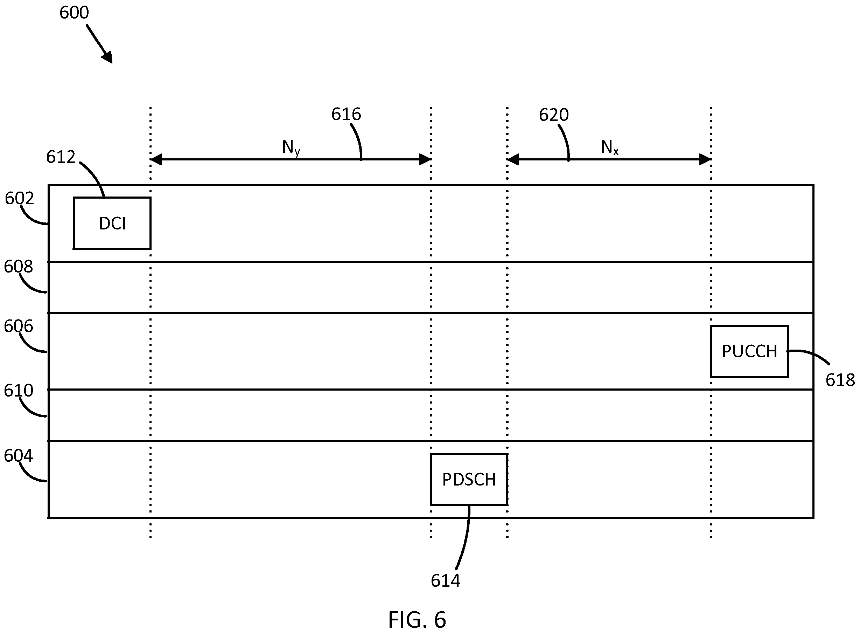

FIG. 6 illustrates an example transmission arrangement 600 for a UE in accordance with some embodiments. The transmission arrangement 600 illustrates an example of scheduled transmissions that can be scheduled for a UE. The UE can be configured for transmissions at different sub-bands.

The transmission arrangement 600 may include a first DL sub-band 602 and a second DL sub-band 604 configured for DL transmissions. The first DL sub-band 602 may be an upper DL sub-band and the second DL sub-band 604 may be a lower DL sub-band.

The transmission arrangement 600 may include a UL sub-band 606 configured for UL transmissions. The UL sub-band 606 may be located between the first DL sub-band 602 and the second DL sub-band 604. A first guard band 608 may be located between the first DL sub-band 602 and the UL sub-band 606 to avoid interference between transmissions on the first DL sub-band 602 and the UL sub-band 606. A second guard band 610 may be located between the second DL sub-band 604 and the UL sub-band 606 to avoid interference between transmissions of the second DL sub-band 604 and the UL sub-band 606.

In the illustrated embodiment, a downlink control information (DCI) transmission 612 may be scheduled on the first DL sub-band 602 for the UE. A physical downlink shared channel (PDSCH) transmission 614 may be scheduled on the second DL sub-band 604. A first number of symbols 616 (N_{y}) may be defined as a minimum number of symbols for switching from an upper DL sub-band to a lower DL sub-band and/or from a lower DL sub-band to an upper DL sub-band. Since transmission of the PDSCH transmission 614 on the second DL sub-band 604 includes switching from the first DL sub-band 602 on which the DCI transmission 612 is scheduled, the PDSCH transmission 614 may be scheduled at least the first number of symbols 616 after the DCI transmission 612 to allow for the switching.

A physical uplink control channel (PUCCH) transmission 618 may be scheduled on the UL sub-band 606. A second number of symbols 620 (Nₓ) may be defined as a minimum number of symbols for switching from a DL sub-band to a UL sub-band and/or from UL sub-band to a DL sub-band. Since transmission of the PUCCH transmission 618 on the UL sub-band 606 includes switching from the second DL sub-band 604 on which the PDSCH transmission 614 is scheduled, the PUCCH transmission 618 may be scheduled at least the second number of symbols 620 after the PDSCH transmission 614 to allow for the switching.

Alternatively, UE may not expect to be scheduled on different sub-bands.

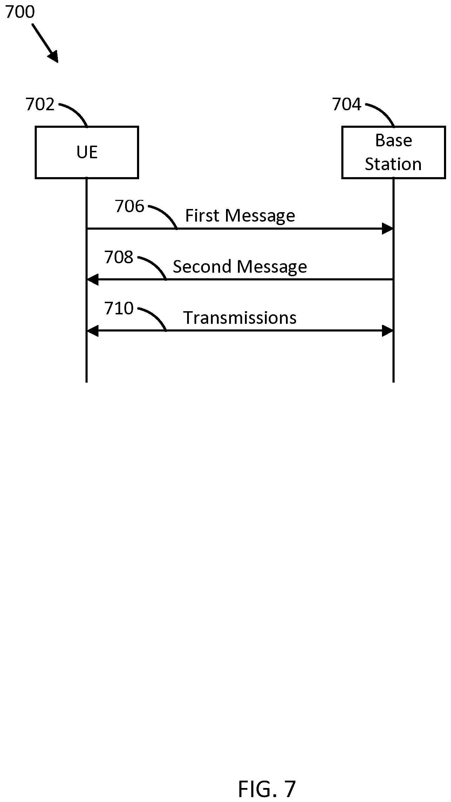

FIG. 7 illustrates an example signaling chart 700 in accordance with some embodiments. For example, the example signaling chart 700 illustrates example signals, messages, and/or operations that may be performed in accordance with the approaches described above.

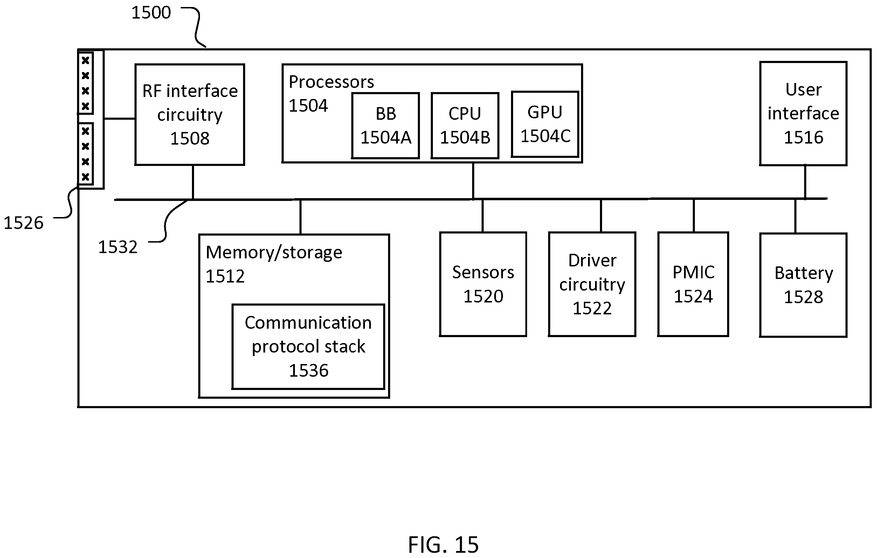

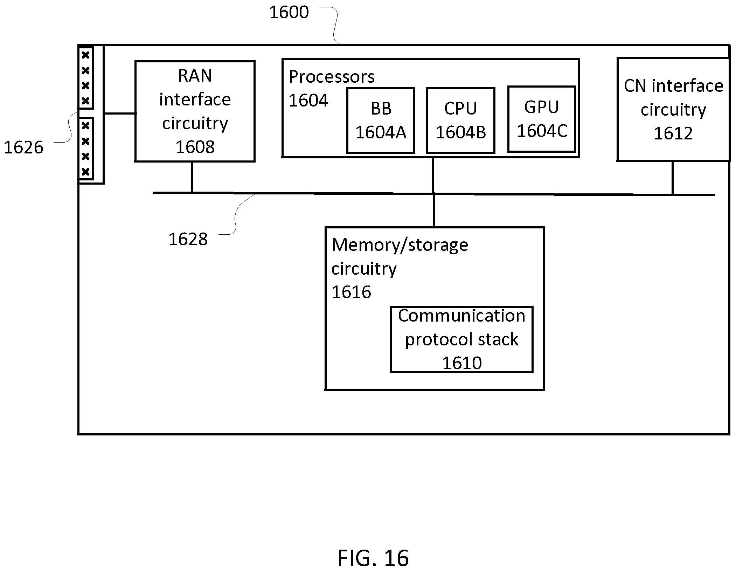

The signaling chart 700 may include a UE 702. The UE 702 may include one or more of the features of the UE 1500 (FIG. 15). The signaling chart 700 may further include a base station 704. The base station 704 may include one or more of the features of the gNB 1600 (FIG. 16).

The UE 702 may generate and/or transmit a first message 706 to the base station 704. The first message 706 may include capability signaling information, such as UE capability signaling. The UE capability signaling may indicate a number of time and/or symbols needed by the UE for switching between non-SBFD symbols and SBFD symbols in accordance with approach 2-1, approach 2-2, approach 2-3, and/or approach 2-4 described above. In some embodiments, the first message 706 may be omitted.

The base station 704 may generate and/or transmit a second message 708 to the UE 702. The second message 708 may include configuration information for the UE 702 for transitions between SBFD symbols and non-SBFD symbols. The configuration information may include the information and corresponding values in accordance with approach 1-1, approach 1-2, approach 1-3, approach 1-4, approach 1-5, and/or approach 3-1.

The UE 702 and the base station 704 may exchange one or more transmissions 710. The UE 702 and the base station 704 may utilize the configuration information for the one or more transmissions 710, including for performing one or more transmissions between SBFD symbols and non-SBFD symbols for the transmissions 710.

### SB-FD & Dynamic TDD

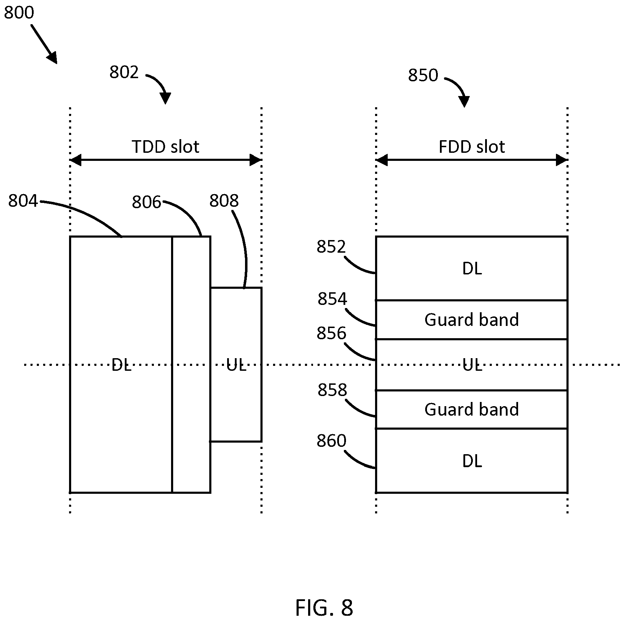

FIG. 8 illustrates example slot arrangements 800 in accordance with some embodiments. The slot arrangements 800 illustrate an example of resource assignments in different slots. The x-axis of the slot arrangements 800 corresponds to time and the y-axis of the slot arrangements 800 corresponds to frequency.

The slot arrangements 800 include an example TDD slot arrangement 802. The TDD slot arrangement 802 illustrates an example of resource assignments for a slot configured with TDD and FD operation. The TDD slot may have resource assignments for an entire duration of the TDD slot.

In the illustrated embodiment, the TDD slot arrangement 802 includes a downlink (DL) assignment portion 804, where the resources within the DL assignment portion 804 are to be utilized for DL transmissions. Further, the illustrated TDD slot arrangement 802 includes a guard band 806, where the resources within the guard band 806 may not be utilized for transmissions. The illustrated TDD slot arrangement 802 further includes an uplink (UL) assignment portion 808, where the resources within the UL assignment portion 808 are to be utilized for UL transmissions.

The guard band 806 may separate the DL assignment portion 804 and the UL assignment portion 808 to provide for transition between the assignment portions. While the TDD slot arrangement 802 illustrates an example resource assignment arrangement, it should be that TDD slots in FD operation may have other assignment arrangements that include DL assignment portions, UL assignment portions, and/or guard bands in other embodiments.

The slot arrangements 800 include an example FDD slot arrangement 850. The FDD slot arrangement 850 illustrates an example of resource assignments for a slot configured with FDD and FD operation. The FDD slot may have resource assignments for an entire sub-band of the FDD slot.

In the illustrated embodiment, the FDD slot arrangement 850 includes a first DL assignment portion 852 and a second DL assignment portion 860, where the resources within the first DL assignment portion 852 and the second DL assignment portion 860 are to be utilized for DL transmissions. Further, the illustrated FDD slot arrangement 850 includes a first guard band 854 and a second guard band 858, where resources within the first guard band 854 and the second guard band 858 may not be utilized for transmissions. The illustrated FDD slot arrangement 850 further includes a UL assignment portion 856, where resources within the UL assignment portion 856 are to be utilized for UL transmissions.

The first guard band 854 may separate the first DL assignment portion 852 and the UL assignment portion 856 to avoid interference between signals transmitted via the resources in the first DL assignment portion 852 and signals transmitted via the resources in the UL assignment portion 856. The second guard band 858 may separate the second DL assignment portion 860 and the UL assignment portion 856 to avoid interference between signals transmitted via the resources in the second DL assignment portion 860 and signals transmitted via the resources in the UL assignment portion 856. While the FDD slot arrangement 850 illustrates an example resource assignment arrangement, it should be that FDD slots in FD operation may have other assignment arrangements that include DL assignment portions, UL assignment portions, and/or guard bands in other embodiments.

### Issue Statement

This disclosure describes the open aspect of UE behavior on transitions symbols. The UE behavior on transitions symbols described includes whether and/or how a physical channel or signal can be transmitted (or received) on occasions including transition points with a mix of non-SBFD and SBFD symbols. Approaches described herein may address indications of time-domain resource allocation (TDRA), frequency-domain resource allocation (FDRA), demodulation reference signal (DMRS), transport block (TB) determination, power allocation, etc. The approaches may be for both UL and DL channels/signals (when applicable).

### FDRA Indication

For approach 4-1, for UL transmission, or DL reception, within a slot that spans both SBFD and non-SBFD symbols, UE may not expect frequency domain allocation to change across different symbol types. A single FDRA indication may be applied to all symbol types. If the FDRA does not fit within the corresponding sub-band or bandwidth part (BWP), UE may drop the uplink transmission or DL reception. Alternatively, UE behavior may not be defined for the FDRA not fitting within the corresponding sub-band or BWP.

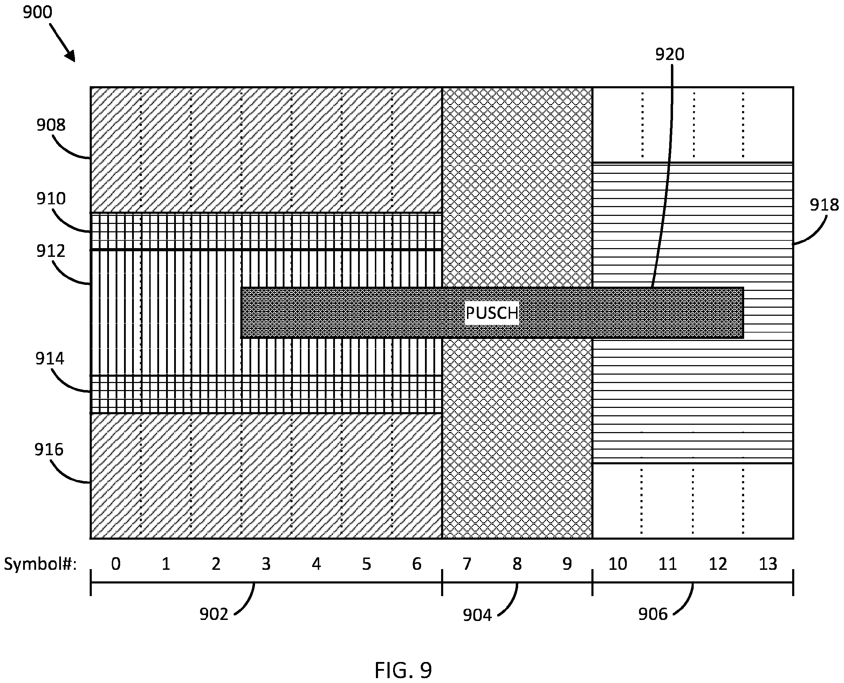

FIG. 9 illustrates an example slot representation 900 in accordance with some embodiments. The slot representation 900 illustrates an example transmission scheduled to extend within SBFD symbols and non-SBFD symbols of the slot represented by the slot representation 900. A transition from non-SBFD symbols to SBFD symbols is illustrated in the slot representation 900.

The slot representation 900 may include one or more non-SBFD symbols 902. In the illustrated embodiment, the non-SBFD symbols 902 extend from symbol 0 of the slot through symbol 6 of the slot. The non-SBFD symbols 902 may include a first DL sub-band 908, a first guard band 910, a UL sub-band 912, a second guard band 914, and/or a second DL sub-band 916.

The slot representation 900 may include one or more SBFD symbols 906. In the illustrated embodiment, the SBFD symbols 906 extend from symbol 10 of the slot through symbol 13 of the slot. The SBFD symbols 906 may include a UL BWP 918. The UL BWP 918 may not extend for over a same bandwidth as the non-SBFD symbols 902, as indicated by the lack of fill above and below the UL BWP 918.

The slot representation 900 may include one or more guard symbols 904. The guard symbols may extend between the non-SBFD symbols 902 and the SBFD symbols 906. In the illustrated embodiment, the guard symbols 904 extend from symbol 7 of the slot through symbol 9 of the slot. There may be no transmissions scheduled during the guard symbols 904 to provide for transition between the non-SBFD symbols 902 and the SBFD symbols 906.

The slot representation 900 may include a transmission 920 that is scheduled to be transmitted during both at least a portion of the non-SBFD symbols 902 and at least a portion of the SBFD symbols 906. For example, the transmission 920 spans from symbol 3 through symbol 12 in the illustrated embodiment. The transmission 920 may be a UL transmission or a DL transmission. In the illustrated embodiment, the transmission 920 comprises a PUSCH transmission.

In accordance with approach 4-1, the transmission 920 may have a same frequency domain allocation for an entire duration of the transmission 920 as the FDRA of the transmission 920 fits within the UL BWP 918. A single FDRA indication may be applied to the transmission 920. For example, a base station may provide an FDRA indication to a UE that indicates the FDRA for the transmission 920. In other embodiments where the FDRA of the transmission 920 doe not fit within the UL BWP 918, the transmission 920 may be dropped by the UE.

### TDRA Indication

For approach 5-1, for UL transmission, or DL reception, within a slot that spans both SBFD and non-SBFD symbols, a start and length indicator value (SLIV) column in the indicated TDRA row indicates usable and non usable symbols for UL transmission (or DL reception). For example, in referring to FIG. 9, the SLIV may indicate S=3 and L=10 for the transmission 920. The SLIV indicating S=3 and L=10 may indicate that symbol 3 through symbol 12 are usable for UL transmission and/or DL reception.

For approach 5-2, for a grant that spans both SBFD and non-SBFD symbols, option 1 or option 2 described below may be implemented. In option 1, for UL transmissions all symbols are considered usable, subject to UE capability (for example when UL sub-band is within, or same size of, UL BWP). For example, the UE may consider all symbols indicated by the SLIV to be usable. In this option, transition may be transparent to UL transmission. With regards to FIG. 9, the usable symbols may be symbol 3 through symbol 12 for option 1. If phase continuity is lost at the gNB due to tradition between SBFD and legacy TDD, gNB may make sure PUSCH contains a DMRS symbol in both sets of SBFD and non-SBFD symbols

In option 2, for UL transmission, or DL reception, usable symbols are all symbols within indicated SLIV excluding symbols for transition. For example, the symbols indicated by the SLIV may be considered usable with the exception of any guard symbols that are considered non usable. This may be for all DL repetitions overlapping with transition and for the case that uplink transmission cannot be kept transparent at the UE side when gNB is switching between SBFD and legacy TDD. For example with respect to FIG. 9, SBFD symbols 3-6 and non-SBFD symbols 10-12 may be usable for the transmission 920 (PUSCH) since symbol 7 through symbol 9 are guard symbols.

For approach 5-3, for a DL grant (or UL transmission where UE needs to exclude guard symbols, i.e. approach 5-2, Option 2) that spans both SBFD and non-SBFD symbols, the first allocated symbol indicated by SLIV may not be in the set of guard symbols. The SLIV may not indicate only one symbol in each segment of SBFD or non-SBFD symbols. For example, the SLIV may indicate at least two SBFD symbols and at least two non-SBFD symbols for UL transmissions and/or DL transmissions that span both SBFD symbols and non-SBFD symbols. For DL reception (or UL transmission under option 2, approach 5-2) repetition type-B may be applied. Repetition over 1 symbol allocation, where that symbol is DMRS, may be only allowed when DMRS and data are frequency division multiplexing (FDM) multiplexed.

For approach 5-4, for DL repletion or UL transmission, repetition type-B may be applied over contiguous usable symbols. With respect to FIG. 9 and for approach 5-4, under approach 5-2 option 2, UE may perform two actual repetitions over usable symbols 3-6 and 10-12. Each repetition may start with a DMRS symbol (at symbols 3 and 10). TBs (transport block size) may be determined based on nominal grant (from symbol 3 to 12, including non-usable symbols). Alternatively, TBs may be determined based on max (or min) of actual segments within the slot. The RV index associated to different actual repetitions can be the same or rotate based on a predetermined pattern (like 0, 2, 3, 1) where the RV associated to the first repetition may be given by the nominal grant.

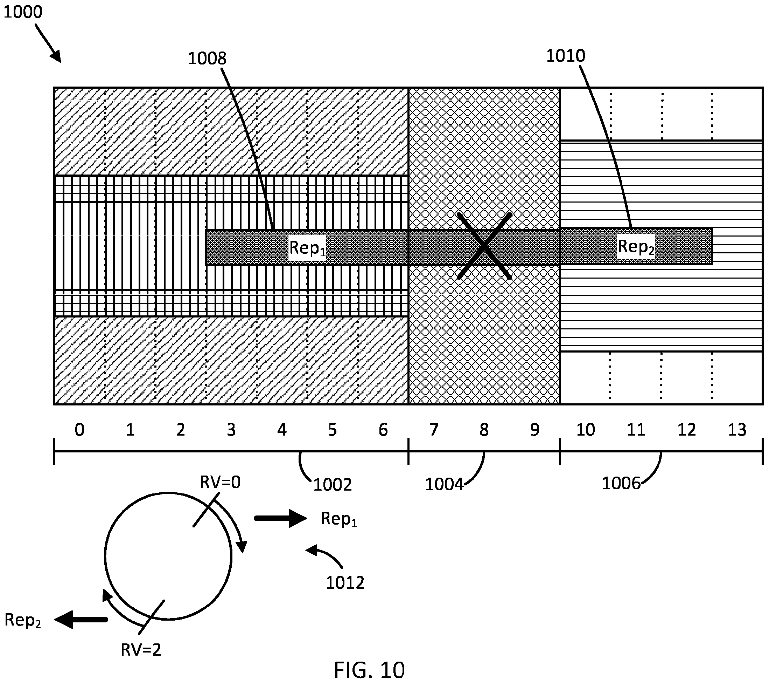

FIG. 10 illustrates an example slot representation 1000 in accordance with some embodiments. The slot representation 1000 illustrates a version of the slot representation 900 (FIG. 9) in accordance with approach 5-2 option 2 and approach 5-4. For example, the slot representation 1000 may have guard symbols being unusable and repetition configuration.

The slot representation 1000 may include one or more of the features of the slot representation 900. The SLIV may have indicated symbol 3 through symbol 12. Based on the guard symbols 1004 being not usable (in accordance with approach 5-2 option 2), it may be determined that symbol 3 through symbol 6 of the non-SBFD symbols 1002 and symbol 10 through symbol 12 of the SBFD symbols 1006 are usable.

The slot representation 1000 may have a first actual repetition 1008 scheduled for symbol 3 through symbol 6 in the non-SBFD symbols 1002. The first actual repetition 1008 may be scheduled for symbol 3 through symbol 6 based on symbol 3 through symbol 6 being the first contiguous usable symbols in the slot. The first actual repetition 1008 may start with a DMRS symbol.

The slot representation 1000 may have a second actual repetition 1010 scheduled for symbol 10 through symbol 12 in the SBFD symbols 1006. The second actual repetition 1010 may be scheduled for symbol 10 through symbol 12 based on symbol 10 through symbol 12 being the second contiguous usable symbols in the slot. The second actual repetition 1010 may start with a DMRS symbol.

The RV index for the repetitions in the illustrated slot representation 1000 may rotate based on a predetermined pattern. The first actual repetition 1008 may have an RV index of 0 and the second actual repetition 1010 may have an RV index of 2 has indicated by cycle 1012.

For approach 5-5, for DL repletion or UL transmission, a single PUSCH transmission with rate matching over contiguous usable symbols may be applied. With respect to FIG. 9 and for approach 5-5, under proposal 5-2 option 2, UE may map coded bits from circular buffer (after scrambling, modulation, etc.), starting from the indicated RV index, to available resource elements (REs) over usable symbols 3-6 and 10-12. The first symbol of each segment is assumed to be a DMRS symbol (at symbols 3 and 10). TBs may be determined based on nominal grant (from symbol 3 to 12, including non-usable symbols), or based on usable symbols (3-6 and 10-12). A single RV index may be applied which is associated to the nominal grant.

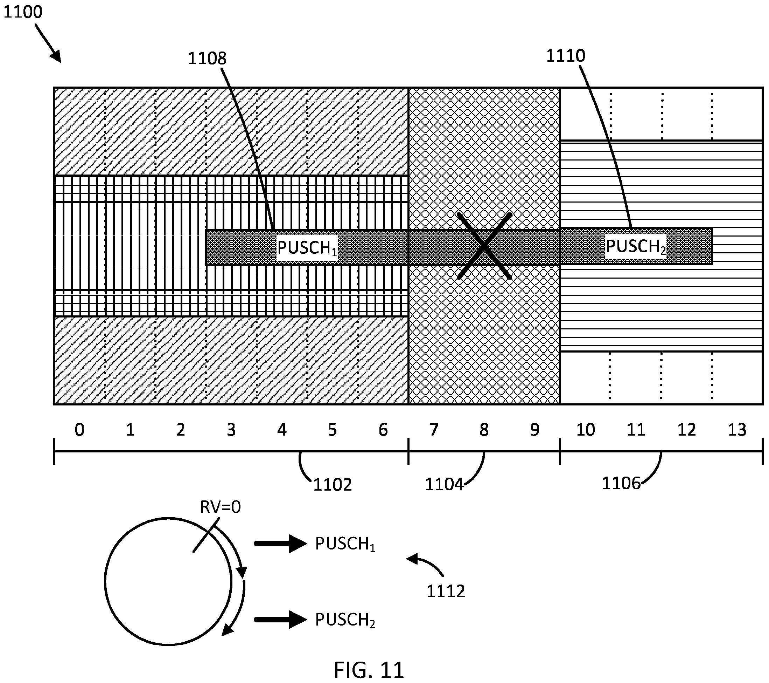

FIG. 11 illustrates an example slot representation 1100 in accordance with some embodiments. The slot representation 1100 illustrates a version of the slot representation 900 (FIG. 9) in accordance with approach 5-2 option 2 and approach 5-5. For example, the slot representation 1100 may have guard symbols being unusable and a single PUSCH transmission configuration.

The slot representation 1100 may include one or more of the features of the slot representation 900. The SLIV may have indicated symbol 3 through symbol 12. Based on the guard symbols 1104 being not usable (in accordance with approach 5-2 option 2), it may be determined that symbol 3 through symbol 6 of the non-SBFD symbols 1102 and symbol 10 through symbol 12 of the SBFD symbols 1106 are usable.

The slot representation 1100 may have a first portion of a PUSCH transmission 1108 scheduled for symbol 3 through symbol 6 in the non-SBFD symbols. The first portion of the PUSCH transmission 1108 may be scheduled for symbol 3 through symbol 6 based on symbol 3 through symbol 6 being the first contiguous usable symbols in the slot. The first portion of the PUSCH transmission 1108 may start with a DMRS symbol.

The slot representation 1100 may have a second portion of the PUSCH transmission 1110 scheduled for symbol 10 through symbol 12 in the non-SBFD symbols. The second portion of the PUSCH transmission 1110 may be scheduled for symbol 10 through symbol 12 based on symbol 10 through symbol 12 being the second contiguous usable symbols in the slot. The second portion of the PUSCH transmission 1110 may start with a DMRS symbol. The second portion of the PUSCH transmission 1110 may be rate matched with the first portion of the PUSCH transmission 1108. The first portion of the PUSCH transmission 1108 and the second portion of the PUSCH transmission 1110 may have a same RV index as indicated by cycle 1112.

### Uplink Power Control

UL transmission across different SBFD and non-SBFD symbols may require different power control parameters (like Po, α, loop index), for the following reasons. For a first reason, for SBFD operation, a gNB may demand more UE's UL transmit power to combat self interference (SI) at the gNB. For a second reason, in SBFD operation, victim UE may suffer cross link interference (CLI) from aggressive UE which can be compensated by lower UL transmit power.

Some detailed approaches to indicate different open loop and closed loop power control parameters for transmissions in SBFD and non-SBFD slots have been proposed. In these proposed approaches, each transmission spans either SBFD or non-SBFD symbol, not a mix of them.

For proposal 6-1, when a gNB is doing full-duplex operation, a UE can be configured with two sets of open power control parameters (Po, α). A sounding reference signals resource indication (SRI) may indicate a (Po, α) associated to the corresponding set based on transmission over SBFD or non-SBFD symbols.

This is different than previously proposed approaches, where each SRI points to two pairs of (Po, α) and additional signaling is needed to indicate which pair should be applied. Approach 6-1 may not work for the case that a single PUSCH transmission spans both SBFD and non-SBFD symbols (i.e. case of proposal 5-2, option 1) in some embodiments.

For approach 6-2, for a UL grant that spans both SBFD and non-SBFD symbols, if no segmentation and/or repetition is involved one or more of the following options may be implemented. For option 1, the UE may apply power control parameters associated to the type of the first allocated symbol. With respect to FIG. 9 and for approach 5-4, the UE may apply power control parameters associated to SBFD transmission for the entire PUSCH transmission (symbols 3-12).

For option 2, a UE may apply power control parameters which results minimum transmit power. For example, if SBFD operation requires UE to reduce transmit power, power control parameters associated to SBFD transmission may be applied to the entire PUSCH transmission (symbols 3-12 in the example)

For option 3, an implicit indication in downlink control information (DCI) may indicate which set of parameters is to be used. For example, if the loop index for the current grant spanning both SBFD and non-SBFD is different from that of the previous uplink grant spanning only SBFD (or only non-SBFD), then (Po, α) for the current grant may be selected from the set of non-SBFD (or SBFD) parameters. For example, if the loop index for the current grant is the same as the previous UL grant spanning only SBFD or only non-SBFD, then parameters (Po, α) may be selected from the same set of parameters as the previous UL grant. If the loop index for the current grant is different than the previous UL grant spanning only SBFD or only non-SBFD, then parameters (Po, α) may be selected from the parameters of the opposite of the SBFD or the non-SBFD from the previous UL grant.

For option 4, an explicit indication in DCI may indicate which set of parameters should be used for the entire uplink transmission. For example, already existing additional 1 (or 2) bits in DCI to indicate SRI is associated to which pair of (Po, α) is to be utilized for the uplink transmission.

For approach 6-3, for a UL grant that spans both SBFD and non-SBFD symbols, when repetitions are involved and DMRS bundling is enabled, in this case, phase continuity may be kept across different repetitions, thus change of transmit power may not allowed/expected. All repetitions may follow power control parameters corresponding to the first repetition.

For case 1, if the first repetition spans SBFD only symbols, current grant which spans both SBFD and non-SBFD symbols may apply power control parameters associated to SBFD operation. For case 2, if the first repetition spans non-SBFD only symbols, current grant which spans both SBFD and non-SBFD symbols may apply power control parameters associated to non-SBFD (i.e. legacy TDD) operation. For case 3, if the current grant is the first repetition, all upcoming repetitions regardless of spanning in SBFD only or non-SBFD only symbols may follow the same power control parameters as for the current grant, where power control parameters of the current grant (1st repetition) may be determined by approach 6-2.

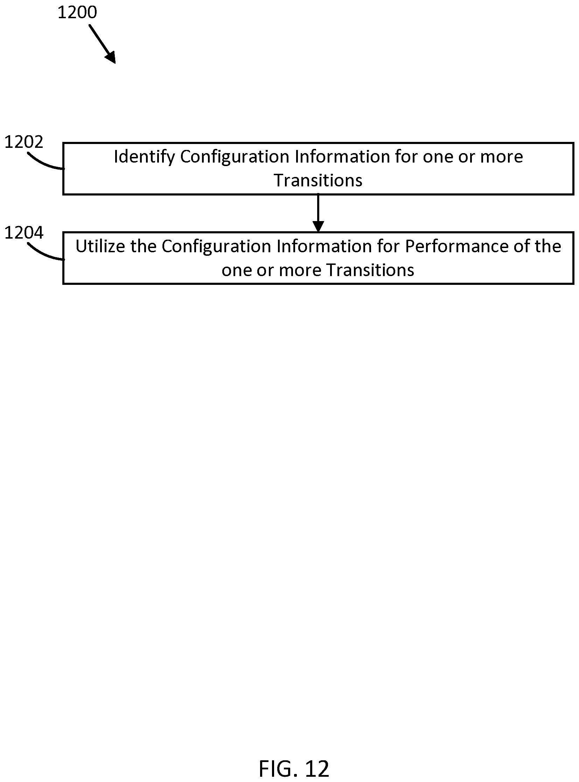

FIG. 12 illustrates an example procedure 1200 for configuring one or more transitions between SBFD symbols and non-SBFD symbols in accordance with some embodiments. One or more transitions may be performed in accordance with the configuration. The procedure 1200 may be performed by a device, such as the UE 1500 (FIG. 15).

The procedure 1200 may include identifying configuration information for one or more transitions in 1202. For example, the UE may identify configuration information for one or more transitions between SBFD symbols and non-SBFD symbols for transmissions corresponding to the device.

In some embodiments, identifying the configuration information may include identifying an indication of one or more guard symbols for the one or more transitions between SBFD symbols and non-SBFD symbols. In some of these embodiments, the indication of the one or more guard symbols may be included within a TDD-UL-DL-pattern. Further, the one or more guard symbols may be included as part of an SBFD configuration within the TDD-UL-DL-pattern.

In some of the embodiments where the indication of one or more guard symbols are identified, the indication of the one or more guard symbols may include an indication of first one or more guard symbols corresponding to a first transition from non-SBFD symbols to SBFD symbols and an indication of second one or more guard symbols corresponding to a second transition from SBFD symbols to non-SBFD symbols. Further, the indication of the one or more guard symbols may include a slot offset indication for the one or more guard symbols, a symbol offset for the one or more guard symbols, and a guard time indication for the one or more guard symbols in some of the embodiments.

In some of the embodiments where the indication of one or more guard symbols are identified, the one or more guard symbols may be within DL symbols or X symbols. Further, the indication of the one or more guard symbols may be included in a TDD-UL-DL-ConfigCommon information element separate from an SBFD configuration indication in some of the embodiments. In some of the embodiments, the indication of the one or more guard symbols may be cell-specific.

In some embodiments, identifying the configuration information may include identifying a first indication of a first one or more guard symbols for a first transition set from non-SBFD symbols to SBFD symbols and back to non-SBFD symbols, and identifying a second indication of a second one or more guard symbols for a second transition set from non-SBFD symbols to SBFD symbols and back to non-SBFD symbols.

In some embodiments, the procedure 1200 may further include generating capability signaling that indicates a first switch time for the device from non-SBFD symbols to SBFD symbols or a second switch time for the device from SBFD symbols to non-SBFD symbols.

In some embodiments, the procedure 1200 may further include generating capability signaling that indicates a number of additional guard symbols for the device for transition from non-SBFD symbols to SBFD symbols. The number of additional guard symbols may be applied toward SBFD symbols, backward from non-SBFD symbols, or both toward SBFD symbols and backward from non-SBFD symbols in some embodiments.

In some embodiments, the procedure 1200 may further include generating capability signaling that indicates a number of additional guard symbols for the device for transition from SBFD symbols to non-SBFD symbols. The number of additional guard symbols may be applied toward non-SBFD symbols, backward from SBFD symbols, or both toward non-SBFD symbols and backward from SBFD symbols in some embodiments.

In some embodiments, the procedure 1200 may further include generating capability signaling that indicates a first number of additional guard symbols for transitions between first symbol states and a second number of additional guard symbols for transitions between second symbol states.

In some embodiments, the procedure 1200 may further include identifying first scheduling information that schedules a first transmission for the device on a first sub-band within first SBFD symbols. Further, the procedure 1200 may include identifying second scheduling information that schedules a second transmission for the devices on a second sub-band within the first SBFD symbol, wherein a number of symbols between the first transmission and the second transmission may exceed a threshold number of symbols in these embodiments. In some of these embodiments, the threshold number of symbols may include a threshold number of symbols for switching from a UL sub-band to a DL sub-band, a threshold number of symbols for switching from a DL sub-band to a UL sub-band, a threshold number of symbols for switching from an upper DL sub-band to a lower DL sub-band, or a threshold number of symbols for switching from a lower DL sub-band to an upper DL sub-band.

The procedure 1200 may include utilizing the configuration information for performance of the one or more transitions in 1204. For example, the UE may utilize the configuration information for performance of the one or more transitions between SBFD symbols and non-SBFD symbols. Utilizing the configuration information may include utilizing the one or more guard symbols indicated for the one or more transitions between SBFD symbols and non-SBFD symbols in embodiments where an indication of one or more guard symbols are indicated.

In some embodiments, utilizing the configuration information may include utilizing the first one or more guard symbols for the first transition set when a first indication of a first one or more guard symbols is identified for a first transition set, and utilizing a second one or more guard symbols for the second transition set when a second indication of a second one or more guard symbols is identified for a second transition set.

While FIG. 12 may arguably imply an order of the operations of the procedure 1200, it should be understood that one or more of the operations may be performed in a different order and/or one or more of the operations may be performed concurrently in embodiments. Further, it should be understood that one or more of the operations may be omitted from and/or one or more additional operations may be added to the procedure 1200 in other embodiments.

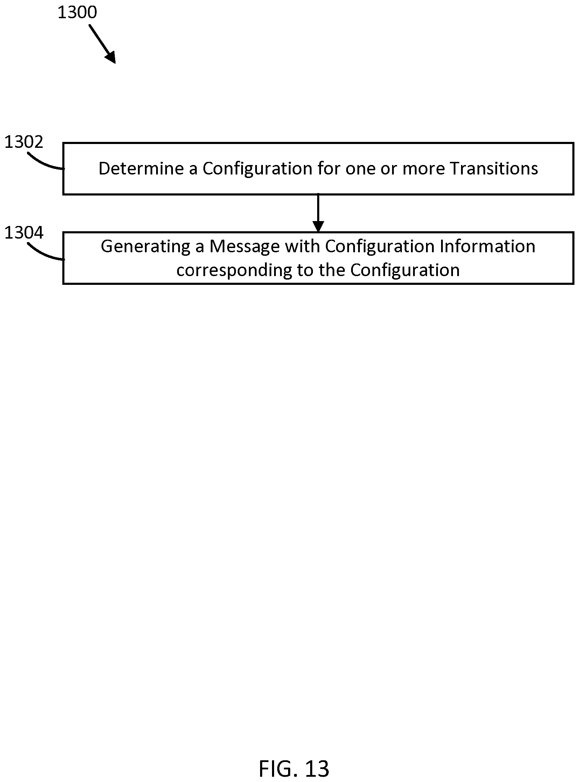

FIG. 13 illustrates an example procedure 1300 for configuring one or more transitions between SBFD symbols and non-SBFD symbols in accordance with some embodiments. A message with configuration may be generated for transmission to a UE. The procedure 1300 may be performed by a base station, such as the gNB 1600 (FIG. 16).

The procedure 1300 may include determining a configuration for one or more transitions in 1302. For example, the base station may determine a configuration for one or more transitions between SBFD symbols and non-SBFD symbols for transmissions corresponding to a UE.

In some embodiments, the procedure 1300 may further include identifying capability signaling received from the UE, and determining, from the capability signaling, a first switch time for the UE from non-SBFD symbols to SBFD symbols or a second switch time for the UE from SBFD symbols to non-SBFD symbols, wherein the configuration is determined based at least in part on the first switch time or the second switch time.

In some embodiments, the procedure 1300 may further include identifying capability signaling received from the UE, and determining, from the capability signaling, a number of additional guard symbols for the UE for transition from non-SBFD symbols to SBFD symbols or a number of additional guard symbols for the UE for transition from SBFD symbols to non-SBFD symbols. The configuration may be determined based at least in part on the number of additional guard symbols for the UE for transition from non-SBFD symbols to SBFD symbols or the number of additional guard symbols for the UE for transition from SBFD symbols to non-SBFD symbols.

In some embodiments, the procedure 1300 may further include identifying capability signaling received from the UE, and determining, from the capability, signaling, a first number of additional guard symbols for transitions between the first symbol states, and a second number of additional guard symbols for transitions between second symbol states.

The procedure 1300 may include generating a message with configuration information corresponding to the configuration in 1304. For example, the base station may generate a message with configuration information corresponding to the configuration for transmission to the UE.

In some embodiments, the configuration information may include an indication of one or more guard symbols for the one or more transitions between SBFD symbols and non-SBFD symbols. In some of these embodiments, the indication of the one or more guard symbols may be included as part of an SBFD configuration within a TDD-UL-DL-pattern of the configuration information. The indication of the one or more guard symbols may include an indication of first one or more guard symbols corresponding to a first transition from non-SBFD symbols to SBFD symbols and an indication of second one or more guard symbols corresponding to a second transition from SBFD symbols to non-SBFD symbols in some of these embodiments.

In some embodiments with the indication of the one or more guard symbols, the indication of the one or more guard symbols may include a slot offset indication for the one or more guard symbols, and a guard time indication for the one or more guard symbols. In some embodiments, the indication of the one or more guard symbols may be included within DL symbols or X symbols. The indication of the one or more guard symbols may be included in a TDD-UL-DL-ConfigCommon information element separate from an SBFD configuration indication in some embodiments. In some embodiments, the indication of the one or more guard symbols may be cell-specific.

In some embodiments, the configuration information may include a first indication of a first one or more guard symbols for a first transition set from non-SBFD symbols to SBFD symbols and back to non-SBFD symbols, and a second indication of a second one or more guard symbols for a second transition set from non-SBFD symbols to SBFD symbols and back to non-SBFD symbols.

In some embodiments, the procedure 1300 may further include generating first scheduling information for scheduling a first transmission for the UE for a first sub-band within first SBFD symbols, and generating second scheduling information for scheduling a second transmission for the UE on a second sub-band within the first SBFD symbols. The number of symbols between the first transmission and the second transmission may exceed a threshold number of symbols. In some of these embodiments, the threshold number of symbols may include a threshold number of symbols for switching from a UL sub-band to a DL sub-band, a threshold number of symbols for switching from a DL sub-band to a UL sub-band, a threshold number of symbols for switching from an upper DL sub-band to a lower DL sub-band, or a threshold number of symbols for switching from a lower DL sub-band to an upper DL sub-band.

While FIG. 13 may arguably imply an order of the operations of the procedure 1300, it should be understood that one or more of the operations may be performed in a different order and/or one or more of the operations may be performed concurrently in embodiments. Further, it should be understood that one or more of the operations may be omitted from and/or one or more additional operations may be added to the procedure 1300 in other embodiments.

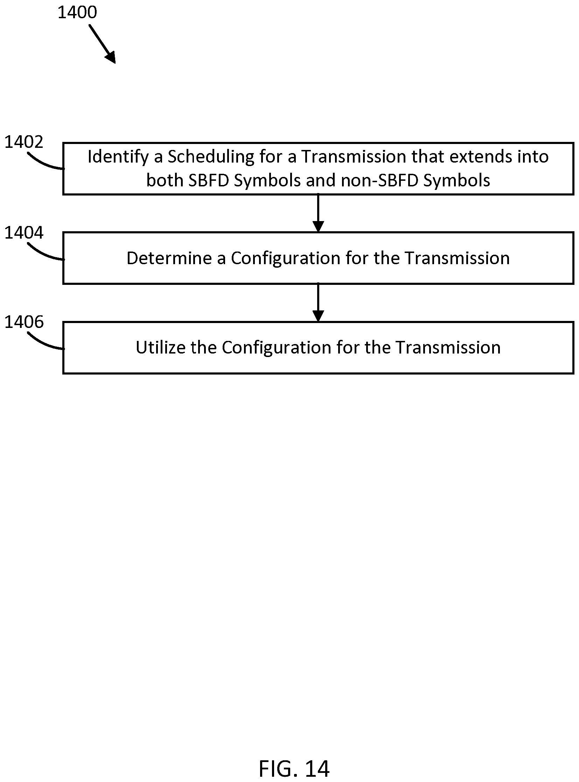

FIG. 14 illustrates an example procedure 1400 for scheduling a transmission that extends into both SBFD symbols and non-SBFD symbols in accordance with some embodiments. A configuration may be determined and utilizing a configuration for the transmission. The procedure 1400 may be performed by a UE, such as the UE 1500 (FIG. 15).

The procedure 1400 may include identifying a scheduling for a transmission that extends into both SBFD symbols and non-SBFD symbols in 1402. For example, the UE may identify a scheduling for a transmission that extends into both SBFD symbols and non-SBFD symbols. In some embodiments, the transmission may include a UL transmission or a DL reception.

In some embodiments, the procedure 1400 may include identifying an indication of usable and non usable symbols for the transmission within an SLIV column of an indicated TDRA row. In some of these embodiments, all of the indicated usable and non usable symbols for the transmission are treated as usable, subject to a capability of the device.

In some embodiments where the indication of usable and non usable symbols is identified, a portion of the indicated usable and non usable symbols excludes symbols for transition between the SBFD symbols and the non-SBFD symbols. In some of these embodiments, a first allocated symbol indicated by a value of the SLIV column may not be in a set of guard symbols, and the SLIV column may not indicate only one symbol in either of the SBFD symbols or the non-SBFD symbols.

The procedure 1400 may include determining a configuration for the transmission in 1404. For example, the UE may determine a configuration for the transmission. In some embodiments, determining the configuration may include determining that an FDRA for the transmission is to be the same for both SBFD symbols and the non-SBFD symbols.

In some embodiments, determining the configuration may include determining that an FDRA for the transmission is to be the same for both the SBFD symbols and the non-SBFD symbols. In these embodiments, the procedure 1400 may further include determining that the FDRA does not fit within a corresponding sub-band or BWP.

In some embodiments, determining the configuration for the transmission may include determining a signal PUSCH transmission with rate matching over contiguous usable symbols is to be applied. In some of these embodiments, a TBs for the transmission may be determined based on a nominal grant or the contiguous usable symbols. A single RV index may be applied to the single PUSCH transmission, and the signal RV index may be associated with a nominal grant in some of these embodiments.

In some embodiments, determining the configuration may include determining that DMRS bundling is enabled, determining that repetitions are to be implemented for the scheduling of the transmission, and determining that transmit power is to be the same for repetitions.

The procedure 1400 may include utilizing the configuration for the transmission in 1406. For example, the UE may utilize the configuration for the transmission.

In some embodiments where a FDRA for the transmission is determined, utilizing the configuration may include utilizing the FDRA for processing of the transmission.

In some embodiments, where an FDRA is determined not to fit within a corresponding sub-band or BWP, utilizing the configuration may include dropping the transmission based at least in part on the determination that the FDRA does not fit within the corresponding sub-band or BWP.

In some embodiments, repetition type-B may be applied to the transmission. In some of these embodiments, determining the configuration may include determining that two actual repetitions are to be performed over usable symbols for the transmission, and utilizing the configuration may include processing the two actual repetitions over the usable symbols for the transmission. In some of these embodiments, a TBs for the transmission may be determined based on a nominal grant, a maximum of actual segments with a slot for the transmission, or a minimum of actual segments within a slot for the transmission. Further, RV indexes for the two actual repetitions may be the same or rotate based on a predetermined pattern for the RV indexes in some of these embodiments.

In some embodiments where a single PUSCH transmission is determined to be applied, utilizing the configuration for the transmission may include utilizing the single PUSCH transmission.

In some embodiments, utilizing the configuration may include applying power control parameters associated to a type of a first allocated symbol for transmission to the transmission, or applying power control parameters which result in a minimum transmit power to the transmission.

In some embodiments where a transmit power is determined to be same for repetitions, utilizing the configuration for the transmission may include using the transmit power for the repetitions.

In some embodiments, the procedure 1400 may include identifying an SRI that indicates a set of open power control parameters for the transmission, the set of open power control parameters based at least in part on transmission over SBFD symbols or the non-SBFD symbols. In some of these embodiments, determining the configuration may include determining the set of open power control parameters. Further, utilizing the configuration may include utilizing the set of open power control parameters for the transmission in some of these embodiments.

In some embodiments, the procedure 1400 may include identifying an implicit indication of a set of open power control parameters for the transmission. In some of these embodiments, utilizing the configuration may include utilizing the indicated set of open power control parameters for the transmission. Further, identifying the implicit indication may include determining whether a first loop index corresponding to the scheduling for the transmission matches or differs from a second loop index corresponding to a previous scheduling in some of these embodiments.

In some embodiments, the procedure 1400 may include identifying an explicit indication of a set of open power control parameters for the transmission in DCI.

While FIG. 14 may arguably imply an order of the operations of the procedure 1400, it should be understood that one or more of the operations may be performed in a different order and/or one or more of the operations may be performed concurrently in embodiments. Further, it should be understood that one or more of the operations may be omitted from and/or one or more additional operations may be added to the procedure 1400 in other embodiments.

FIG. 15 illustrates an example UE 1500 in accordance with some embodiments. The UE 1500 may be any mobile or non-mobile computing device, such as, for example, mobile phones, computers, tablets, industrial wireless sensors (for example, microphones, carbon dioxide sensors, pressure sensors, humidity sensors, thermometers, motion sensors, accelerometers, laser scanners, fluid level sensors, inventory sensors, electric voltage/current meters, actuators, etc.), video surveillance/monitoring devices (for example, cameras, video cameras, etc.), wearable devices (for example, a smart watch), relaxed-IoT devices. In some embodiments, the UE 1500 may be a RedCap UE or NR-Light UE.

The UE 1500 may include processors 1504, RF interface circuitry 1508, memory/storage 1512, user interface 1516, sensors 1520, driver circuitry 1522, power management integrated circuit (PMIC) 1524, antenna structure 1526, and battery 1528. The components of the UE 1500 may be implemented as integrated circuits (ICs), portions thereof, discrete electronic devices, or other modules, logic, hardware, software, firmware, or a combination thereof. The block diagram of FIG. 15 is intended to show a high-level view of some of the components of the UE 1500. However, some of the components shown may be omitted, additional components may be present, and different arrangement of the components shown may occur in other implementations.

The components of the UE 1500 may be coupled with various other components over one or more interconnects 1532, which may represent any type of interface, input/output, bus (local, system, or expansion), transmission line, trace, optical connection, etc. that allows various circuit components (on common or different chips or chipsets) to interact with one another.

The processors 1504 may include processor circuitry such as, for example, baseband processor circuitry (BB) 1504A, central processor unit circuitry (CPU) 1504B, and graphics processor unit circuitry (GPU) 1504C. The processors 1504 may include any type of circuitry or processor circuitry that executes or otherwise operates computer-executable instructions, such as program code, software modules, or functional processes from memory/storage 1512 to cause the UE 1500 to perform operations as described herein.

In some embodiments, the baseband processor circuitry 1504A may access a communication protocol stack 1536 in the memory/storage 1512 to communicate over a 3GPP compatible network. In general, the baseband processor circuitry 1504A may access the communication protocol stack to: perform user plane functions at a PHY layer, MAC layer, RLC layer, PDCP layer, SDAP layer, and PDU layer; and perform control plane functions at a PHY layer, MAC layer, RLC layer, PDCP layer, RRC layer, and a non-access stratum layer. In some embodiments, the PHY layer operations may additionally/alternatively be performed by the components of the RF interface circuitry 1508.

The baseband processor circuitry 1504A may generate or process baseband signals or waveforms that carry information in 3GPP-compatible networks. In some embodiments, the waveforms for NR may be based cyclic prefix OFDM (CP-OFDM) in the uplink or downlink, and discrete Fourier transform spread OFDM (DFT-S-OFDM) in the uplink.

The memory/storage 1512 may include one or more non-transitory, computer-readable media that includes instructions (for example, communication protocol stack 1536) that may be executed by one or more of the processors 1504 to cause the UE 1500 to perform various operations described herein. The memory/storage 1512 include any type of volatile or non-volatile memory that may be distributed throughout the UE 1500. In some embodiments, some of the memory/storage 1512 may be located on the processors 1504 themselves (for example, L1 and L2 cache), while other memory/storage 1512 is external to the processors 1504 but accessible thereto via a memory interface. The memory/storage 1512 may include any suitable volatile or non-volatile memory such as, but not limited to, dynamic random access memory (DRAM), static random access memory (SRAM), eraseable programmable read only memory (EPROM), electrically eraseable programmable read only memory (EEPROM), Flash memory, solid-state memory, or any other type of memory device technology.

The RF interface circuitry 1508 may include transceiver circuitry and radio frequency front module (RFEM) that allows the UE 1500 to communicate with other devices over a radio access network. The RF interface circuitry 1508 may include various elements arranged in transmit or receive paths. These elements may include, for example, switches, mixers, amplifiers, filters, synthesizer circuitry, control circuitry, etc.

In the receive path, the RFEM may receive a radiated signal from an air interface via antenna structure 1526 and proceed to filter and amplify (with a low-noise amplifier) the signal. The signal may be provided to a receiver of the transceiver that down-converts the RF signal into a baseband signal that is provided to the baseband processor of the processors 1504.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna structure 1526.

In various embodiments, the RF interface circuitry 1508 may be configured to transmit/receive signals in a manner compatible with NR access technologies.

The antenna structure 1526 may include antenna elements to convert electrical signals into radio waves to travel through the air and to convert received radio waves into electrical signals. The antenna elements may be arranged into one or more antenna panels. The antenna structure 1526 may have antenna panels that are omnidirectional, directional, or a combination thereof to enable beamforming and multiple input, multiple output communications. The antenna structure 1526 may include microstrip antennas, printed antennas fabricated on the surface of one or more printed circuit boards, patch antennas, phased array antennas, etc. The antenna structure 1526 may have one or more panels designed for specific frequency bands including bands in FR1 or FR2.

The user interface 1516 includes various input/output (I/O) devices designed to enable user interaction with the UE 1500. The user interface 1516 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes "LEDs" and multi-character visual outputs, or more complex outputs such as display devices or touchscreens (for example, liquid crystal displays (LCDs), LED displays, quantum dot displays, projectors, etc.), with the output of characters, graphics, multimedia objects, and the like being generated or produced from the operation of the UE 1500.

The sensors 1520 may include devices, modules, or subsystems whose purpose is to detect events or changes in its environment and send the information (sensor data) about the detected events to some other device, module, subsystem, etc. Examples of such sensors include, *inter alia,* inertia measurement units comprising accelerometers, gyroscopes, or magnetometers; microelectromechanical systems or nanoelectromechanical systems comprising 3-axis accelerometers, 3-axis gyroscopes, or magnetometers; level sensors; flow sensors; temperature sensors (for example, thermistors); pressure sensors; barometric pressure sensors; gravimeters; altimeters; image capture devices (for example, cameras or lensless apertures); light detection and ranging sensors; proximity sensors (for example, infrared radiation detector and the like); depth sensors; ambient light sensors; ultrasonic transceivers; microphones or other like audio capture devices; etc.

The driver circuitry 1522 may include software and hardware elements that operate to control particular devices that are embedded in the UE 1500, attached to the UE 1500, or otherwise communicatively coupled with the UE 1500. The driver circuitry 1522 may include individual drivers allowing other components to interact with or control various input/output (I/O) devices that may be present within, or connected to, the UE 1500. For example, driver circuitry 1522 may include a display driver to control and allow access to a display device, a touchscreen driver to control and allow access to a touchscreen interface, sensor drivers to obtain sensor readings of sensor circuitry 1520 and control and allow access to sensor circuitry 1520, drivers to obtain actuator positions of electro-mechanic components or control and allow access to the electro-mechanic components, a camera driver to control and allow access to an embedded image capture device, audio drivers to control and allow access to one or more audio devices.

The PMIC 1524 may manage power provided to various components of the UE 1500. In particular, with respect to the processors 1504, the PMIC 1524 may control power-source selection, voltage scaling, battery charging, or DC-to-DC conversion.

In some embodiments, the PMIC 1524 may control, or otherwise be part of, various power saving mechanisms of the UE 1500. For example, if the platform UE is in an RRC_Connected state, where it is still connected to the RAN node as it expects to receive traffic shortly, then it may enter a state known as Discontinuous Reception Mode (DRX) after a period of inactivity. During this state, the UE 1500 may power down for brief intervals of time and thus save power. If there is no data traffic activity for an extended period of time, then the UE 1500 may transition off to an RRC_Idle state, where it disconnects from the network and does not perform operations such as channel quality feedback, handover, etc. The UE 1500 goes into a very low power state and it performs paging where again it periodically wakes up to listen to the network and then powers down again. The UE 1500 may not receive data in this state; in order to receive data, it must transition back to RRC_Connected state. An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

A battery 1528 may power the UE 1500, although in some examples the UE 1500 may be mounted deployed in a fixed location, and may have a power supply coupled to an electrical grid. The battery 1528 may be a lithium ion battery, a metal-air battery, such as a zinc-air battery, an aluminum-air battery, a lithium-air battery, and the like. In some implementations, such as in vehicle-based applications, the battery 1528 may be a typical lead-acid automotive battery.

FIG. 16 illustrates an example gNB 1600 in accordance with some embodiments. The gNB 1600 may include processors 1604, RF interface circuitry 1608, core network (CN) interface circuitry 1612, memory/storage circuitry 1616, and antenna structure 1626.

The components of the gNB 1600 may be coupled with various other components over one or more interconnects 1628.

The processors 1604, RF interface circuitry 1608, memory/storage circuitry 1616 (including communication protocol stack 1610), antenna structure 1626, and interconnects 1628 may be similar to like-named elements shown and described with respect to FIG. 15.

The CN interface circuitry 1612 may provide connectivity to a core network, for example, a 5th Generation Core network (5GC) using a 5GC-compatible network interface protocol such as carrier Ethernet protocols, or some other suitable protocol. Network connectivity may be provided to/from the gNB 1600 via a fiber optic or wireless backhaul. The CN interface circuitry 1612 may include one or more dedicated processors or FPGAs to communicate using one or more of the aforementioned protocols. In some implementations, the CN interface circuitry 1612 may include multiple controllers to provide connectivity to other networks using the same or different protocols.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### Examples

In the following sections, further exemplary embodiments are provided.

Example 1 may include a method of operating a device, comprising identifying configuration information for one or more transitions between sub-band full duplex (SBFD) symbols and non-SBFD symbols for transmissions corresponding to the device, and utilizing the configuration information for performance of the one or more transitions between SBFD symbols and non-SBFD symbols.

Example 2 may include the method of example 1, wherein identifying the configuration information includes identifying an indication of one or more guard symbols for the one or more transitions between SBFD symbols and non-SBFD symbols, and wherein utilizing the configuration information includes utilizing the one or more guard symbols indicated for the one or more transitions between SBFD symbols and non-SBFD symbols.

Example 3 may include the method of example 2, wherein the indication of the one or more guard symbols is included within a time division duplex (TDD)-uplink (UL)-downlink (DL)-pattern.

Example 4 may include the method of example 3, wherein the indication of the one or more guard symbols is included as part of an SBFD configuration within the TDD-UL-DL-pattern.

Example 5 may include the method of example 2, wherein the indication of the one or more guard symbols includes an indication of first one or more guard symbols corresponding to a first transition from non-SBFD symbols to SBFD symbols and an indication of second one or more guard symbols corresponding to a second transition from SBFD symbols to non-SBFD symbols.

Example 6 may include the method of example 2, wherein the indication of the one or more guard symbols includes a slot offset indication for the one or more guard symbols, a symbol offset indication for the one or more guard symbols, and a guard time indication for the one or more guard symbols.

Example 7 may include the method of example 2, wherein the one or more guard symbols are within downlink (DL) symbols or flexible (X) symbols.

Example 8 may include the method of example 2, wherein the indication of the one or more guard symbols is included in a time division duplex (TDD)-uplink (UL)-downlink (DL)-ConfigCommon information element separate from an SBFD configuration indication.

Example 9 may include the method of example 2, wherein the indication of the one or more guard symbols is cell-specific.

Example 10 may include the method of example 1, wherein identifying the configuration information includes identifying a first indication of a first one or more guard symbols for a first transition set from non-SBFD symbols to SBFD symbols and back to non-SBFD symbols, and identifying a second indication of a second one or more guard symbols for a second transition set from non-SBFD symbols to SBFD symbols and back to non-SBFD symbols, and utilizing the configuration information includes utilizing the first one or more guard symbols for the first transition set, and utilizing the second one or more guard symbols for the second transition set.

Example 11 may include the method of example 1, further comprising generating capability signaling that indicates a first switch time for the device from non-SBFD symbols to SBFD symbols or a second switch time for the device from SBFD symbols to non-SBFD symbols.

Example 12 may include the method of example 1, further comprising generating capability signaling that indicates a number of additional guard symbols for the device for transition from non-SBFD symbols to SBFD symbols.

Example 13 may include the method of example 12, wherein the number of additional guard symbols are to be applied toward SBFD symbols, backward from non-SBFD symbols, or both toward SBFD symbols and backward from non-SBFD symbols.

Example 14 may include the method of example 1, further comprising generating capability signaling that indicates a number of additional guard symbols for the device for transition from SBFD symbols to non-SBFD symbols.

Example 15 may include the method of example 14, wherein the number of additional guard symbols are to be applied toward non-SBFD symbols, backward from SBFD symbols, or both toward non-SBFD symbols and backward from SBFD symbols.

Example 16 may include the method of example 1, further comprising generating capability signaling that indicates a first number of additional guard symbols for transitions between first symbol states, and a second number of additional guard symbols for transitions between second symbol states.

Example 17 may include the method of example 1, further comprising identifying first scheduling information that schedules a first transmission for the device on a first sub-band within first SBFD symbols, and identifying second scheduling information that schedules a second transmission for the device on a second sub-band within the first SBFD symbols, wherein a number of symbols between the first transmission and the second transmission exceeds a threshold number of symbols.

Example 18 may include the method of example 17, wherein the threshold number of symbols includes a threshold number of symbols for switching from an uplink (UL) sub-band to a downlink (DL) sub-band, a threshold number of symbols for switching from a DL sub-band to a UL sub-band, a threshold number of symbols for switching from an upper DL sub-band to a lower DL sub-band, or a threshold number of symbols for switching from a lower DL sub-band to an upper DL sub-band.

Example 19 may include a method of operating a base station, comprising determining a configuration for one or more transitions between sub-band full duplex (SBFD) symbols and non-SBFD symbols for transmissions corresponding to a user equipment (UE), and generating a message with configuration information corresponding to the configuration for transmission to the UE.

Example 20 may include the method of example 19, wherein the configuration information includes an indication of one or more guard symbols for the one or more transitions between SBFD symbols and non-SBFD symbols.

Example 21 may include the method of example 20, wherein the indication of the one or more guard symbols is included as a part of an SBFD configuration within a time division duplex (TDD)-uplink (UL)-downlink (DL)-pattern of the configuration information.

Example 22 may include the method of example 20, wherein the indication of the one or more guard symbols includes an indication of first one or more guard symbols corresponding to a first transition from non-SBFD symbols to SBFD symbols and an indication of second one or more guard symbols corresponding to a second transition from SBFD symbols to non-SBFD symbols.

Example 23 may include the method of example 20, wherein the indication of the one or more guard symbols includes a slot offset indication for the one or more guard symbols, a symbol offset indication for the one or more guard symbols, and a guard time indication for the one or more guard symbols.

Example 24 may include the method of example 20, wherein the indication of the one or more guard symbols is included within downlink (DL) symbols or flexible (X) symbols.

Example 25 may include the method of example 20, wherein the indication of the one or more guard symbols is included in a time division duplex (TDD)-uplink (UL)-downlink (DL)-ConfigCommon information element separate from an SBFD configuration indication.

Example 26 may include the method of example 20, wherein the indication of the one or more guard symbols is cell-specific.

Example 27 may include the method of example 19, wherein the configuration information includes a first indication of a first one or more guard symbols for a first transition set from non-SBFD symbols to SBFD symbols and back to non-SBFD symbols, and a second indication of a second one or more guard symbols for a second transition set from non-SBFD symbols to SBFD symbols and back to non-SBFD symbols.

Example 28 may include the method of example 19, further comprising identifying capability signaling received from the UE, and determining, from the capability signaling, a first switch time for the UE from non-SBFD symbols to SBFD symbols or a second switch time for the UE from SBFD symbols to non-SBFD symbols, wherein the configuration is determined based at least in part on the first switch time or the second switch time.

Example 29 may include the method of example 19, further comprising identifying capability signaling received from the UE, and determining, from the capability signaling, a number of additional guard symbols for the UE for transition from non-SBFD symbols to SBFD symbols or a number of additional guard symbols for the UE for transition from SBFD symbols to non-SBFD symbols, wherein the configuration is determined based at least in part on the number of additional guard symbols for the UE for transition from non-SBFD symbols to SBFD symbols or the number of additional guard symbols for the UE for transition from SBFD symbols to non-SBFD symbols.

Example 30 may include the method of example 19, further comprising identifying capability signaling received from the UE, and determining, from the capability signaling, a first number of additional guard symbols for transitions between first symbol states, and a second number of additional guard symbols for transitions between second symbol states.

Example 31 may include the method of example 19, further comprising generating first scheduling information for scheduling a first transmission for the UE on a first sub-band within first SBFD symbols, and generating second scheduling information for scheduling a second transmission for the UE on a second sub-band within the first SBFD symbols, wherein a number of symbols between the first transmission and the second transmission exceeds a threshold number of symbols.

Example 32 may include the method of example 31, wherein the threshold number of symbols includes a threshold number of symbols for switching from an uplink (UL) sub-band to a downlink (DL) sub-band, a threshold number of symbols for switching from a DL sub-band to a UL sub-band, a threshold number of symbols for switching from an upper DL sub-band to a lower DL sub-band, or a threshold number of symbols for switching from a lower DL sub-band to an upper DL sub-band.

Example 33 may include a method of operating a device, comprising identifying a scheduling for a transmission that extends into both sub-band full duplex (SBFD) symbols and non-SBFD symbols, determining a configuration for the transmission, and utilizing the configuration for the transmission.

Example 34 may include the method of example 33, wherein the transmission includes an uplink (UL) transmission or a downlink (DL) reception.

Example 35 may include the method of example 33, wherein determining the configuration includes determining that a frequency domain resource allocation (FDRA) for the transmission is to be the same for both the SBFD symbols and the non-SBFD symbols, and wherein utilizing the configuration includes utilizing the FDRA for processing of the transmission.

Example 36 may include the method of example 33, wherein determining the configuration includes determining that a frequency domain resource allocation (FDRA) for the transmission is to be the same for both the SBFD symbols and the non-SBFD symbols, wherein the method further comprises determining that the FDRA does not fit within a corresponding sub-band or bandwidth part (BWP), wherein utilizing the configuration includes dropping the transmission based at least in part on the determination that the FDRA does not fit within the corresponding sub-band or BWP.

Example 37 may include the method of example 33, further comprising identifying an indication of usable and non usable symbols for the transmission within a start and length indicator value (SLIV) column of an indicated time-domain resource allocation (TDRA) row.

Example 38 may include the method of example 37, wherein all of the indicated usable and non usable symbols for the transmission are treated as usable, subject to a capability of the device.

Example 39 may include the method of example 37, wherein a portion of the indicated usable and non usable symbols excludes symbols for transition between the SBFD symbols and the non-SBFD symbols.

Example 40 may include the method of example 39, wherein a first allocated symbol indicated by a value of the SLIV column is not in a set of guard symbols, and the SLIV column does not indicate only one symbol in either of the SBFD symbols or the non-SBFD symbols.

Example 41 may include the method of example 33, wherein repetition type-B is applied to the transmission, wherein determining the configuration includes determining that two actual repetitions are to be performed over usable symbols for the transmission, and wherein utilizing the configuration includes processing the two actual repetitions over the usable symbols for the transmission.

Example 42 may include the method of example 41, wherein a transport block size (TBs) for the transmission is determined based on a nominal grant, a maximum of actual segments with a slot for the transmission, or a minimum of actual segments within a slot for the transmission.

Example 43 may include the method of example 41, wherein redundancy version (RV) indexes for the two actual repetitions are the same or rotate based on a predetermined pattern for the RV indexes.

Example 44 may include the method of example 33, wherein determining the configuration for the transmission includes determining a single physical uplink shared channel (PUSCH) transmission with rate matching over contiguous usable symbols is to be applied, and wherein utilizing the configuration for the transmission includes utilizing the single PUSCH transmission.

Example 45 may include the method of example 44, wherein a transport block size (TBs) for the transmission is determined based on a nominal grant or the contiguous usable symbols.

Example 46 may include the method of example 44, wherein a single redundancy version (RV) index is applied to the single PUSCH transmission, and wherein the single RV index is associated with a nominal grant.

Example 47 may include the method of example 33, further comprising identifying a sounding reference signal resource indication (SRI) that indicates a set of open power control parameters for the transmission, the set of open power control parameters based at least in part on transmission over the SBFD symbols or the non-SBFD symbols, wherein determining the configuration includes determining the set of open power control parameters, and wherein utilizing the configuration includes utilizing the set of open power control parameters for the transmission.

Example 48 may include the method of example 33, wherein utilizing the configuration includes applying power control parameters associated to a type of a first allocated symbol for the transmission to the transmission, or applying power control parameters which result in a minimum transmit power to the transmission.

Example 49 may include the method of example 33, further comprising identifying an implicit indication of a set of open power control parameters for the transmission, wherein utilizing the configuration includes utilizing the indicated set of open power control parameters for the transmission.

Example 50 may include the method of example 49, wherein identifying the implicit indication includes determining whether a first loop index corresponding to the scheduling for the transmission matches or differs from a second loop index corresponding to a previous scheduling.

Example 51 may include the method of example 33, further comprising identifying an explicit indication of a set of open power control parameters for the transmission in downlink control information (DCI).

Example 52 may include the method of example 33, wherein determining the configuration includes determining that demodulation reference signal (DMRS) bundling is enabled, determining that repetitions are to be implemented for the scheduling of the transmission, and determining that a transmit power is to be same for the repetitions, and wherein utilizing the configuration for the transmission includes using the transmit power for the repetitions.

Example 53 may include an apparatus comprising means to perform one or more elements of a method described in or related to any of examples 1-52, or any other method or process described herein.

Example 54 may include one or more non-transitory computer-readable media comprising instructions to cause an electronic device, upon execution of the instructions by one or more processors of the electronic device, to perform one or more elements of a method described in or related to any of examples 1-52, or any other method or process described herein.

Example 55 may include an apparatus comprising logic, modules, or circuitry to perform one or more elements of a method described in or related to any of examples 1-52, or any other method or process described herein.

Example 56 may include a method, technique, or process as described in or related to any of examples 1-52, or portions or parts thereof.

Example 57 may include an apparatus comprising: one or more processors and one or more computer-readable media comprising instructions that, when executed by the one or more processors, cause the one or more processors to perform the method, techniques, or process as described in or related to any of examples 1-52, or portions thereof.

Example 58 may include a signal as described in or related to any of examples 1-52, or portions or parts thereof.

Example 59 may include a datagram, information element, packet, frame, segment, PDU, or message as described in or related to any of examples 1-52, or portions or parts thereof, or otherwise described in the present disclosure.

Example 60 may include a signal encoded with data as described in or related to any of examples 1-52, or portions or parts thereof, or otherwise described in the present disclosure.

Example 61 may include a signal encoded with a datagram, IE, packet, frame, segment, PDU, or message as described in or related to any of examples 1-52, or portions or parts thereof, or otherwise described in the present disclosure.

Example 62 may include an electromagnetic signal carrying computer-readable instructions, wherein execution of the computer-readable instructions by one or more processors is to cause the one or more processors to perform the method, techniques, or process as described in or related to any of examples 1-52, or portions thereof.

Example 63 may include a computer program comprising instructions, wherein execution of the program by a processing element is to cause the processing element to carry out the method, techniques, or process as described in or related to any of examples 1-52, or portions thereof.

Example 64 may include a signal in a wireless network as shown and described herein.

Example 65 may include a method of communicating in a wireless network as shown and described herein.

Example 66 may include a system for providing wireless communication as shown and described herein.

Example 67 may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. One or more computer-readable media having instructions that, when executed, cause processing circuitry to:
receive configuration information that indicates a slot index and a symbol index; and
determine one or more sub-band full duplex (SBFD) symbols within a time division duplex (TDD) uplink (UL)-downlink (DL) pattern period based on the configuration information.

2. The one or more computer-readable media of claim 1, wherein the slot index is a first slot index and the symbol index is a first symbol index, wherein the configuration information further indicates a second slot index and a second symbol index, wherein the first slot index and the first symbol index indicate first one or more guard symbols before the one or more SBFD symbols, and wherein the second slot index and second symbol index indicate second one or more guard symbols after the one or more SBFD symbols.

3. The one or more computer-readable media of claim 2, wherein the first one or more guard symbols correspond to a first transition from first one or more non-SBFD symbols to the one or more SBFD symbols, and wherein the second one or more guard symbols correspond to a second transition from the one or more SBFD symbols to second one or more non-SBFD symbols.

4. The one or more computer-readable media of any of claims 1-3,
wherein the slot index and the symbol index indicate one or more guard symbols for a transition between SBFD symbols and non-SBFD symbols, and wherein the instructions, when executed, further cause the processing circuitry to:
utilize the configuration information for performance of the transition, the one or more guard symbols for the transition.

5. The one or more computer-readable media of any of claims 1-3, wherein:
the slot index and the symbol index are included as part of an SBFD configuration within a TDD-UL-DL pattern; or
the slot index is included in a slot offset indication, and wherein the symbol index is included in a symbol offset indication.

6. The one or more computer readable media of any of claims 1-3,
wherein the slot index and the symbol index correspond to one or more guard symbols, and wherein:
the configuration information further indicates a guard time indication for the one or more guard symbols; or
the one or more guard symbols are within downlink (DL) symbols or flexible (X) symbols.

7. A method comprising:
determining configuration information for one or more sub-band full duplex (SBFD) symbols within a time division duplex (TDD) uplink (UL)-downlink (DL) pattern, the configuration information indicating a slot index and a symbol index corresponding to the one or more SBFD symbols; and
generating a message with the configuration information for transmission.

8. The method of claim 7, wherein the slot index is a first slot index and the symbol index is a first symbol index, wherein the configuration information further indicates a second slot index and a second symbol index, wherein the first slot index and the first symbol index indicate first one or more guard symbols before the one or more SBFD symbols, and wherein the second slot index and the second symbol index indicate second one or more guard symbols after the one or more SBFD symbols.

9. The method of claim 8, wherein the first one or more guard symbols correspond to a first transition from first one or more non-SBFD symbols to the one or more SBFD symbols, and wherein the second one or more guard symbols correspond to a second transition from the one or more SBFD symbols to second one or more non-SBFD symbols.

10. The method of any of claims 7-9, wherein the slot index and the symbol index indicate one or more guard symbols for a transition between SBFD symbols and non-SBFD symbols, and wherein the method further comprises:
utilizing the configuration information for performance of the transition, the one or more guard symbols for the transition.

11. The method of any of claims 7-9, wherein:
the slot index is included in a slot offset indication, and the symbol index is included in a symbol offset indication; or
the slot index and the symbol index correspond to one or more guard symbols, and the configuration information further indicates a guard time indication for the one or more guard symbols.

12. An apparatus to:
identify configuration information for a time division duplex (TDD) uplink (UL)-downlink (DL) pattern period, the configuration information including a slot index and a symbol index; and
determine one or more sub-band full duplex (SBFD) symbols with the TDD-UL-DL pattern period based on the configuration information.

13. The apparatus of claim 12, wherein the slot index is a first slot index and the symbol index is a first symbol index, wherein the configuration information further indicates a second slot index and a second symbol index, wherein the first slot index and the first symbol index indicate first one or more guard symbols before the one or more SBFD symbols, and wherein the slot index and second symbol index indicate second one or more guard symbols after the one or more SBFD symbols.

14. The apparatus of claim 13, wherein the first one or more guard symbols correspond to a first transition from first one or more non-SBFD symbols to the one or more SBFD symbols, and wherein the second one or more guard symbols correspond to a second transition from the one or more SBFD symbols to second one or more non-SBFD symbols.

15. The apparatus of any of claims 12-14, wherein the slot index and the symbol index indicate one or more guard symbols for a transition between SBFD symbols and non-SBFD symbols, and wherein the apparatus is further to:
utilize the configuration information for performance of the transition, the one or more guard symbols for the transition.
